# EUROPEAN PATENT APPLICATION

(11) **EP 3 131 325 A1**
(43) Date of publication of application: **15.02.2017**
(21) Application number: 14890620.9
(22) Date of filing: 13.11.2014
(51) Int. Cl.: H04W 12/08

(54) **METHOD, DEVICE AND COMMUNICATION SYSTEM FOR TERMINAL TO ACCESS COMMUNICATION NETWORK**

(30) Priority: 30.04.2014 WO PCT/CN2014/076661
(71) Applicant: Huawei Technologies Co. Ltd., Shenzhen, Guangdong 518129 (CN)
(72) Inventor: WU, Yizhuang, Shenzhen Guangdong 518129 (CN); XU, Yixian, Shenzhen Guangdong 518129 (CN); LI, Huan, Shenzhen Guangdong 518129 (CN); YU, Youyang, Shenzhen Guangdong 518129 (CN)
(74) Representative: Goddar, Heinz J.
(86) International application number: PCT/CN2014/091004
(87) International publication number: WO 2015/165250

(57) **Abstract**

Embodiments of the present invention provide a method for accessing a communications network by a terminal, an apparatus, and a communications system, relate to the communications field, and can effectively reduce a resource waste on a network side that is caused when WLCP is triggered by a malicious application on a terminal. A first message sent by a second device is received, where the first message includes a second message and an authentication parameter, the authentication parameter is a token or a User Datagram Protocol UDP port number, and the second message includes the encrypted authentication parameter; or the first message includes a second message, and the second message includes an encrypted authentication parameter; or the first message includes a second message and an authentication parameter; and the second message is sent to a terminal. The method for accessing a communications network by a terminal, the apparatus, and the communications system provided in the embodiments of the present invention are used by a terminal to access a communications network.

## Description

This application claims priority to PCT Patent Application No. PCT/CN2014/076661, filed with the Chinese Patent Office on April 30, 2014 and entitled "METHOD FOR ACCESSING COMMUNICATIONS NETWORK BY TERMINAL, APPARATUS, AND COMMUNICATIONS SYSTEM", which is incorporated herein by reference in its entirety.

### TECHNICAL FIELD

The present invention relates to the communications field, and in particular, to a method for accessing a communications network by a terminal, an apparatus, and a communications system.

### BACKGROUND

An EPC (Evolved Packet Core, evolved packet core) is a core network of the 4^{th} generation mobile communications network LTE (Long Term Evolution, Long Term Evolution), and includes a PGW (Packet Data Network Gateway, packet data network gateway), AAA (Authentication Authorization Accounting server, authentication, authorization, and accounting server), and an HSS (Home Subscriber Server, home subscriber server). The PGW is configured to bear an IP address assigned to user equipment in an establishment process of access to a communications network by a terminal, and is also used as a user plane mobility anchor. The AAA is configured to manage a terminal that accesses an LTE network, and provide authentication, authorization, and account services. The HSS is a user database, and is configured to store related information of a user. The related information may be related information about user authentication and authorization, user location and IP address provisioning, and the like.

With deployment of 802.1X, 802.11u, and Hotspot 2.0, a 3GPP (the 3rd Generation Partnership Project, the 3^{rd} Generation Partnership Project) operator allows UE (User Equipment, user equipment) to use a TWAN (Trusted WLAN Access Network, trusted WLAN access network) to access an EPC network by using an S2a interface, where the WLAN is a WLAN (Wireless Local Area Networks, wireless local area network), and the TWAN includes a TWAG (Trusted WLAN access gateway, trusted WLAN access gateway). A new control plane protocol WLCP (WLAN Control Protocol, WLAN Control Protocol) is defined between the UE and the TWAG, and is used to provide a control plane management function. There may be two transmission manners for WLCP: UDP (User Datagram Protocol, User Datagram Protocol)/IP (Internet Protocol, Internet Protocol) transmission or Ethernet frame (Ethernet frame) transmission. UDP/IP is selected as a transmission manner for WLCP in a current standard.

In the prior art, if an APP (Application, application) is used to implement WLCP, a WLCP APP (WLAN Control Protocol application, WLAN Control Protocol application) may be installed on a terminal in advance, and when the terminal accesses an EPC by using a TWAN, the WLCP APP is run and a UDP (User Datagram Protocol, User Datagram Protocol) port is called to initiate a PDN connection establishment or release procedure to a TWAG. The WLCP APP may be installed on the terminal by an operator in advance, the WLCP APP is authorized by the operator, and the WLCP APP needs to have a private API (Application Programming Interface, application programming interface) between the WLCP APP and an OS (Operating System, operating system) or a private API customized for the terminal, to obtain parameter information that is of the WLCP APP and cannot be obtained by another APP. A case in which the OS is cracked and the private API is called falls beyond the discussion scope of the present invention.

When there is a malicious application on the terminal, the malicious application may constantly call the UDP port used by WLCP, to initiate a PDN connection establishment request message to the TWAG to trigger WLCP, and consequently, a resource waste on a network side is caused, and the TWAG cannot process a request initiated by the authorized WLCP APP; or the malicious application constantly initiates a connection release request message to maliciously break a PDN connection of the terminal.

### SUMMARY

Embodiments of the present invention provide a method for accessing a communications network by a terminal, an apparatus, and a communications system, and can effectively reduce a resource waste on a network side that is caused when WLCP is triggered by a malicious application on a terminal.

To achieve the foregoing objective, the following technical solutions are used in the embodiments of the present invention.

According to a first aspect, a method for accessing a communications network by a terminal is provided and is applied to a first device, where the first device is a trusted wireless local area network access gateway TWAG, or the first device includes a TWAG and a trusted wireless local area network authentication, authorization, and accounting service proxy TWAP, and the method includes:
receiving a first message sent by a second device, where the first message includes a second message and an authentication parameter, the authentication parameter is a token or a User Datagram Protocol UDP port number, and the second message includes the encrypted authentication parameter; or receiving a first message sent by a second device, where the first message includes the second message, the second message includes the encrypted authentication parameter, and the authentication parameter is a token or a User Datagram Protocol UDP port number; or receiving a first message sent by a second device, where the first message includes a second message and an authentication parameter; and
sending the second message to the terminal.

With reference to the first aspect, in a first implementable manner, after the sending the second message to the terminal, the method further includes:
receiving a packet data network connection request message sent by the terminal, where the packet data network connection request message includes the authentication parameter, and the packet data network connection request message is a packet data network connection establishment request message, a packet data network disconnection request message, or a packet data network connection release request message.

With reference to the first implementable manner, in a second implementable manner, after the receiving a packet data network connection request message sent by the terminal, the method further includes:
verifying whether the authentication parameter that is in the packet data network connection request message and corresponding to an identifier of the terminal is the same as a locally stored authentication parameter corresponding to the identifier of the terminal; and
if the authentication parameter that is in the packet data network connection request message and corresponding to the identifier of the terminal is the same as the locally stored authentication parameter corresponding to the identifier of the terminal, sending a packet data network connection response message to the terminal, where the packet data network connection response message is a packet data network connection establishment response message, a packet data network disconnection response message, or a packet data network connection release response message.

With reference to the first implementable manner, in a third implementable manner, after the receiving a packet data network connection request message sent by the terminal, the method further includes:
checking whether the packet data network connection request message includes the authentication parameter;
if the packet data network connection request message includes the authentication parameter, verifying whether the authentication parameter that is in the packet data network connection request message and corresponding to an identifier of the terminal is the same as a locally stored authentication parameter corresponding to the identifier of the terminal; and
if the authentication parameter that is in the packet data network connection request message and corresponding to the identifier of the terminal is the same as the locally stored authentication parameter corresponding to the identifier of the terminal, sending a packet data network connection response message to the terminal, where the packet data network connection response message is a packet data network connection establishment response message, a packet data network disconnection response message, or a packet data network connection release response message.

With reference to any one of the first aspect, or the first implementable manner to the third implementable manner, in a fourth implementable manner, when the first message includes the second message and the authentication parameter, and the second message includes the encrypted authentication parameter, after the receiving a first message sent by a second device, the method further includes:
reading the authentication parameter corresponding to the identifier of the terminal and the identifier of the terminal from the first message; and
storing the authentication parameter corresponding to the identifier of the terminal and the identifier of the terminal.

With reference to any one of the first aspect, or the first implementable manner to the third implementable manner, in a fifth implementable manner, when the first message includes the second message, and the second message includes the encrypted authentication parameter, before the receiving a first message sent by a second device, the method further includes:
generating the authentication parameter corresponding to the identifier of the terminal;
storing the authentication parameter corresponding to the identifier of the terminal and the identifier of the terminal; and
sending the authentication parameter to the second device.

With reference to any one of the first aspect, or the first implementable manner to the third implementable manner, in a sixth implementable manner, when the first message includes the second message and the authentication parameter, before the receiving a first message sent by a second device, the method further includes:
receiving a third message sent by the terminal, where the third message includes the encrypted authentication parameter; and
sending the first message to the second device, where the first message includes the third message.

With reference to any one of the first aspect, or the first implementable manner to the sixth implementable manner, in a seventh implementable manner, the authentication parameter is used to perform verification on or identify an authorized Wireless Local Area Network Control Protocol application.

With reference to any one of the first aspect, or the first implementable manner to the seventh implementable manner, in an eighth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the first aspect, or the first implementable manner to the eighth implementable manner, in a ninth implementable manner, the first message is a message borne in the DIAMETER protocol.

With reference to any one of the first aspect, or the first implementable manner to the ninth implementable manner, in a tenth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a second aspect, a method for accessing a communications network by a terminal is provided and is applied to a terminal. The method includes:
receiving a second message sent by a first device, where the second message includes the encrypted authentication parameter, and the authentication parameter is a token or a User Datagram Protocol UDP port number; or generating an authentication parameter corresponding to an identifier of the terminal.

With reference to the second aspect, in a first implementable manner, after the generating a User Datagram Protocol UDP port number corresponding to an identifier of the terminal, the method further includes:
encrypting the authentication parameter; and
sending a third message to the first device, where the third message includes the encrypted authentication parameter.

With reference to the first implementable manner, in a second implementable manner, after the receiving a second message sent by a first device, the method further includes:
sending a packet data network connection request message to the first device, where the packet data network connection request message includes the authentication parameter, and the packet data network connection request message is a packet data network connection establishment request message, a packet data network disconnection request message, or a packet data network connection release request message.

With reference to the second implementable manner, in a third implementable manner, after the sending a packet data network connection request message to the first device, the method further includes:
receiving a packet data network connection response message sent by the first device, where the packet data network connection response message is a packet data network connection establishment response message, a packet data network disconnection response message, or a packet data network connection release response message.

With reference to any one of the second aspect, or the first implementable manner to the third implementable manner, in a fourth implementable manner, the authentication parameter is used to perform verification on or identify an authorized Wireless Local Area Network Control Protocol application.

With reference to any one of the second aspect, or the first implementable manner to the fourth implementable manner, in a fifth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the second aspect, or the first implementable manner to the fifth implementable manner, in a sixth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a third aspect, a method for accessing a communications network by a terminal is provided and is applied to a second device, where the second device is an authentication, authorization, and accounting server AAA or a home subscriber server HSS, and the method includes:
obtaining an authentication parameter, where the authentication parameter is a token or a User Datagram Protocol UDP port number;
encrypting the authentication parameter;
performing integrity protection on a first message, where the first message includes a second message and the authentication parameter, and the second message includes the encrypted authentication parameter; or performing integrity protection on a first message, where the first message includes the second message, and the second message includes the encrypted authentication parameter; or performing integrity protection on a second message, and generating a first message, where the first message includes the second message and the authentication parameter, and the second message includes the encrypted authentication parameter; or performing integrity protection on a second message, and generating a first message, where the first message includes the second message, and the second message includes the encrypted authentication parameter; or performing integrity protection on a second message, and generating a first message, where the first message includes the second message and the authentication parameter; and
sending the first message to a first device, so that the first device obtains the second message or the authentication parameter from the first message.

With reference to the third aspect, in a first implementable manner, the obtaining an authentication parameter includes:
generating the authentication parameter corresponding to an identifier of the terminal.

With reference to the third aspect, in a second implementable manner, the obtaining an authentication parameter includes:
receiving the authentication parameter sent by the first device; or receiving the first message sent by the first device, and performing a decryption operation on the encrypted authentication parameter where the first message includes a third message, and the third message includes the encrypted authentication parameter.

With reference to any one of the third aspect, the first implementable manner, or the second implementable manner, in a third implementable manner, the authentication parameter is used to perform verification on or identify an authorized Wireless Local Area Network Control Protocol application.

With reference to any one of the third aspect, or the first implementable manner to the third implementable manner, in a fourth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the third aspect, or the first implementable manner to the fourth implementable manner, in a fifth implementable manner, the first message is a message borne in the DIAMETER protocol.

With reference to any one of the third aspect, or the first implementable manner to the fifth implementable manner, in a sixth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a fourth aspect, a first device is provided, where the first device is a trusted wireless local area network access gateway TWAG, or the first device includes a TWAG and a trusted wireless local area network authentication, authorization, and accounting service proxy TWAP, and the first device includes:
a first receiving unit, configured to receive a first message sent by a second device, where the first message includes a second message and an authentication parameter, the authentication parameter is a token or a User Datagram Protocol UDP port number, and the second message includes the encrypted authentication parameter; or the first receiving unit, further configured to receive a first message sent by a second device, where the first message includes the second message, the second message includes the encrypted authentication parameter, and the authentication parameter is a token or a User Datagram Protocol UDP port number; or the first receiving unit, further configured to receive a first message sent by a second device, where the first message includes a second message and an authentication parameter; and
a first sending unit, configured to send the second message to the terminal.

With reference to the fourth aspect, in a first implementable manner, the first device further includes:
a second receiving unit, configured to receive a packet data network connection request message sent by the terminal, where the packet data network connection request message includes the authentication parameter, and the packet data network connection request message is a packet data network connection establishment request message, a packet data network disconnection request message, or a packet data network connection release request message.

With reference to the first implementable manner, in a second implementable manner, the first device further includes:
a first verification unit, configured to verify whether the authentication parameter that is in the packet data network connection request message and corresponding to an identifier of the terminal is the same as a locally stored authentication parameter corresponding to the identifier of the terminal; and
a second sending unit, configured to: if the authentication parameter that is in the packet data network connection request message and corresponding to the identifier of the terminal is the same as the locally stored authentication parameter corresponding to the identifier of the terminal, send a packet data network connection response message to the terminal, where the packet data network connection response message is a packet data network connection establishment response message, a packet data network disconnection response message, or a packet data network connection release response message.

With reference to the first implementable manner, in a third implementable manner, the first device further includes:
a check unit, configured to check whether the packet data network connection request message includes the authentication parameter;
a second verification unit, configured to: if the packet data network connection request message includes the authentication parameter, verify whether the authentication parameter that is in the packet data network connection request message and corresponding to an identifier of the terminal is the same as a locally stored authentication parameter corresponding to the identifier of the terminal; and
a third sending unit, configured to: if the authentication parameter that is in the packet data network connection request message and corresponding to the identifier of the terminal is the same as the locally stored authentication parameter corresponding to the identifier of the terminal, send a packet data network connection response message to the terminal, where the packet data network connection response message is a packet data network connection establishment response message, a packet data network disconnection response message, or a packet data network connection release response message.

With reference to any one of the fourth aspect, or the first implementable manner to the third implementable manner, in a fourth implementable manner, when the first message includes the second message and the authentication parameter, and the second message includes the encrypted authentication parameter, the first device further includes:
a reading unit, configured to read the authentication parameter corresponding to the identifier of the terminal and the identifier of the terminal from the first message; and
a first storage unit, configured to store the authentication parameter corresponding to the identifier of the terminal and the identifier of the terminal.

With reference to any one of the fourth aspect, or the first implementable manner to the third implementable manner, in a fifth implementable manner, when the first message includes the second message, and the second message includes the encrypted authentication parameter, the first device further includes:
a generation unit, configured to generate the authentication parameter corresponding to the identifier of the terminal;
a second storage unit, configured to store the authentication parameter corresponding to the identifier of the terminal and the identifier of the terminal; and
a fourth sending unit, configured to send the authentication parameter to the second device.

With reference to any one of the fourth aspect, or the first implementable manner to the third implementable manner, in a sixth implementable manner, when the first message includes the second message and the authentication parameter, the first device further includes:
a third receiving unit, configured to receive a third message sent by the terminal, where the third message includes the encrypted authentication parameter; and
a fifth sending unit, configured to send the first message to the second device, where the first message includes the third message.

With reference to any one of the fourth aspect, or the first implementable manner to the sixth implementable manner, in a seventh implementable manner, the authentication parameter is used to perform verification on or identify an authorized Wireless Local Area Network Control Protocol application.

With reference to any one of the fourth aspect, or the first implementable manner to the seventh implementable manner, in an eighth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the fourth aspect, or the first implementable manner to the eighth implementable manner, in a ninth implementable manner, the first message is a message borne in the DIAMETER protocol.

With reference to any one of the fourth aspect, or the first implementable manner to the ninth implementable manner, in a tenth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a fifth aspect, a terminal is provided, where the terminal includes:
a first receiving unit, configured to receive a second message sent by a first device, where the second message includes the encrypted authentication parameter, and the authentication parameter is a token or a User Datagram Protocol UDP port number; or a generation unit, configured to generate an authentication parameter corresponding to an identifier of the terminal.

With reference to the fifth aspect, in a first implementable manner, the terminal further includes:
an encryption unit, configured to encrypt the authentication parameter; and
a sending unit, configured to send a third message to the first device, where the third message includes the encrypted authentication parameter.

With reference to the first implementable manner, in a second implementable manner, the terminal further includes:
the sending unit is further configured to send a packet data network connection request message to the first device, where the packet data network connection request message includes the authentication parameter, and the packet data network connection request message is a packet data network connection establishment request message, a packet data network disconnection request message, or a packet data network connection release request message.

With reference to the second implementable manner, in a third implementable manner, the terminal further includes:
a second receiving unit, configured to receive a packet data network connection response message sent by the first device, where the packet data network connection response message is a packet data network connection establishment response message, a packet data network disconnection response message, or a packet data network connection release response message.

With reference to any one of the fifth aspect, or the first implementable manner to the third implementable manner, in a fourth implementable manner, the authentication parameter is used to perform verification on or identify an authorized Wireless Local Area Network Control Protocol application.

With reference to any one of the fifth aspect, or the first implementable manner to the fourth implementable manner, in a fifth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the fifth aspect, or the first implementable manner to the fifth implementable manner, in a sixth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a sixth aspect, a second device is provided, where the second device is an authentication, authorization, and accounting server AAA or a home subscriber server HSS, and the second device includes:
an obtaining unit, configured to obtain an authentication parameter, where the authentication parameter is a token or a User Datagram Protocol UDP port number;
an encryption unit, configured to encrypt the authentication parameter;
an integrity protection unit, configured to perform integrity protection on a first message, where the first message includes a second message and the authentication parameter, and the second message includes the encrypted authentication parameter; or the integrity protection unit, further configured to perform integrity protection on a first message, where the first message includes the second message, and the second message includes the encrypted authentication parameter; or the integrity protection unit, further configured to: perform integrity protection on a second message, and generate a first message, where the first message includes the second message and the authentication parameter, and the second message includes the encrypted authentication parameter; or the integrity protection unit, further configured to: perform integrity protection on a second message, and generate a first message, where the first message includes the second message, and the second message includes the encrypted authentication parameter; or the integrity protection unit, further configured to: perform integrity protection on a second message, and generate a first message, where the first message includes the second message and the authentication parameter; and
a sending unit, configured to send the first message to a first device, so that the first device obtains the second message or the authentication parameter from the first message.

With reference to the sixth aspect, in a first implementable manner, the obtaining unit is specifically configured to:
generate the authentication parameter corresponding to an identifier of the terminal.

With reference to the sixth aspect, in a second implementable manner, the obtaining unit is specifically configured to:
receive the authentication parameter sent by the first device; or receive the first message sent by the first device, and perform a decryption operation on the encrypted authentication parameter, where the first message includes a third message, and the third message includes the encrypted authentication parameter.

With reference to any one of the sixth aspect, the first implementable manner, or the second implementable manner, in a third implementable manner, the authentication parameter is used to perform verification on or identify an authorized Wireless Local Area Network Control Protocol application.

With reference to any one of the sixth aspect, or the first implementable manner to the third implementable manner, in a fourth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the sixth aspect, or the first implementable manner to the fourth implementable manner, in a fifth implementable manner, the first message is a message borne in the DIAMETER protocol.

With reference to any one of the sixth aspect, or the first implementable manner to the fifth implementable manner, in a sixth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a seventh aspect, a communications system is provided and includes:
the first device described above, the terminal described above, and the second device described above; where
the second device is configured to: obtain an authentication parameter, where the authentication parameter is a token or a User Datagram Protocol UDP port number;
encrypt the authentication parameter;
perform integrity protection on a first message, where the first message includes a second message and the authentication parameter, and the second message includes the encrypted authentication parameter; or perform integrity protection on a first message, where the first message includes the second message, and the second message includes the encrypted authentication parameter; or perform integrity protection on a second message, and generate a first message, where the first message includes the second message and the authentication parameter, and the second message includes the encrypted authentication parameter; or perform integrity protection on a second message, and generate a first message, where the first message includes the second message, and the second message includes the encrypted authentication parameter; or perform integrity protection on a second message, and generate a first message, where the first message includes the second message and the authentication parameter; and
send the first message to the first device, so that the first device obtains the second message or the authentication parameter from the first message;
the first device is configured to: receive the first message sent by the second device, where the first message includes the second message and the authentication parameter, the authentication parameter is a token or a User Datagram Protocol UDP port number, and the second message includes the encrypted authentication parameter; or receive the first message sent by the second device, where the first message includes the second message, the second message includes the encrypted authentication parameter, and the authentication parameter is a token or a User Datagram Protocol UDP port number; or receive the first message sent by the second device, where the first message includes the second message and the authentication parameter; and
send the second message to the terminal; and
the terminal is configured to: receive the second message sent by the first device, where the second message includes the encrypted authentication parameter, and the authentication parameter is a token or a User Datagram Protocol UDP port number; or generate the authentication parameter corresponding to an identifier of the terminal.

According to an eighth aspect, a first device is provided, where the first device is a trusted wireless local area network access gateway TWAG, or the first device includes a TWAG and a trusted wireless local area network authentication, authorization, and accounting service proxy TWAP, and the first device includes:
a receiver, configured to receive a first message sent by a second device, where the first message includes a second message and an authentication parameter, the authentication parameter is a token or a User Datagram Protocol UDP port number, and the second message includes the encrypted authentication parameter; or the receiver, further configured to receive a first message sent by a second device, where the first message includes the second message, the second message includes the encrypted authentication parameter, and the authentication parameter is a token or a User Datagram Protocol UDP port number; or the receiver, further configured to receive a first message sent by a second device, where the first message includes a second message and an authentication parameter; and
a transmitter, configured to send the second message to the terminal.

With reference to the eighth aspect, in a first implementable manner, the first device further includes:
the receiver is further configured to:
   receive a packet data network connection request message sent by the terminal, where the packet data network connection request message includes the authentication parameter, and the packet data network connection request message is a packet data network connection establishment request message, a packet data network disconnection request message, or a packet data network connection release request message.

With reference to the first implementable manner, in a second implementable manner, the first device further includes:
a processor, configured to verify whether the authentication parameter that is in the packet data network connection request message and corresponding to an identifier of the terminal is the same as a locally stored authentication parameter corresponding to the identifier of the terminal; where
the transmitter is further configured to:
   if the authentication parameter that is in the packet data network connection request message and corresponding to the identifier of the terminal is the same as the locally stored authentication parameter corresponding to the identifier of the terminal, send a packet data network connection response message to the terminal, where the packet data network connection response message is a packet data network connection establishment response message, a packet data network disconnection response message, or a packet data network connection release response message.

With reference to the first implementable manner, in a third implementable manner,
the processor is further configured to:
   check whether the packet data network connection request message includes the authentication parameter;
   the processor is further configured to:
      if the packet data network connection request message includes the authentication parameter, verify whether the authentication parameter that is in the packet data network connection request message and corresponding to an identifier of the terminal is the same as a locally stored authentication parameter corresponding to the identifier of the terminal; and
      the transmitter is further configured to:
         if the authentication parameter that is in the packet data network connection request message and corresponding to the identifier of the terminal is the same as the locally stored authentication parameter corresponding to the identifier of the terminal, send a packet data network connection response message to the terminal, where the packet data network connection response message is a packet data network connection establishment response message, a packet data network disconnection response message, or a packet data network connection release response message.

With reference to any one of the eighth aspect, or the first implementable manner to the third implementable manner, in a fourth implementable manner, when the first message includes the second message and the authentication parameter, and the second message includes the encrypted authentication parameter,
the processor is further configured to read the authentication parameter corresponding to the identifier of the terminal and the identifier of the terminal from the first message; and
the processor is further configured to store the authentication parameter corresponding to the identifier of the terminal and the identifier of the terminal.

With reference to any one of the eighth aspect, or the first implementable manner to the third implementable manner, in a fifth implementable manner, when the first message includes the second message, and the second message includes the encrypted authentication parameter,
the processor is further configured to generate the authentication parameter corresponding to the identifier of the terminal;
the processor is further configured to store the authentication parameter corresponding to the identifier of the terminal and the identifier of the terminal; and
the transmitter is further configured to send the authentication parameter to the second device.

With reference to any one of the eighth aspect, or the first implementable manner to the third implementable manner, in a sixth implementable manner, when the first message includes the second message and the authentication parameter,
the receiver is further configured to receive a third message sent by the terminal, where the third message includes the encrypted authentication parameter; and
the transmitter is further configured to send the first message to the second device, where the first message includes the third message.

With reference to any one of the eighth aspect, or the first implementable manner to the sixth implementable manner, in a seventh implementable manner, the authentication parameter is used to perform verification on or identify an authorized Wireless Local Area Network Control Protocol application.

With reference to any one of the eighth aspect, or the first implementable manner to the seventh implementable manner, in an eighth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the eighth aspect, or the first implementable manner to the eighth implementable manner, in a ninth implementable manner, the first message is a message borne in the DIAMETER protocol.

With reference to any one of the eighth aspect, or the first implementable manner to the ninth implementable manner, in a tenth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a ninth aspect, a terminal is provided, where the terminal includes:
a receiver, configured to receive a second message sent by a first device, where the second message includes an encrypted authentication parameter, and the authentication parameter is a token or a User Datagram Protocol UDP port number; or a processor, configured to generate an authentication parameter corresponding to an identifier of the terminal, where the authentication parameter is a token or a User Datagram Protocol UDP port number.

With reference to the ninth aspect, in a first implementable manner,
the processor is further configured to encrypt the authentication parameter; and
the terminal further includes:
   a transmitter, configured to send a third message to the first device, where the third message includes the encrypted authentication parameter.

With reference to the first implementable manner, in a second implementable manner, the terminal further includes:
the transmitter is configured to send a packet data network connection request message to the first device, where the packet data network connection request message includes the authentication parameter, and the packet data network connection request message is a packet data network connection establishment request message, a packet data network disconnection request message, or a packet data network connection release request message.

With reference to the second implementable manner, in a third implementable manner,
the receiver is further configured to:
   receive a packet data network connection response message sent by the first device, where the packet data network connection response message is a packet data network connection establishment response message, a packet data network disconnection response message, or a packet data network connection release response message.

With reference to any one of the ninth aspect, or the first implementable manner to the third implementable manner, in a fourth implementable manner, the authentication parameter is used to perform verification on or identify an authorized Wireless Local Area Network Control Protocol application.

With reference to any one of the ninth aspect, or the first implementable manner to the fourth implementable manner, in a fifth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the ninth aspect, or the first implementable manner to the fifth implementable manner, in a sixth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to a tenth aspect, a second device is provided, where the second device is an authentication, authorization, and accounting server AAA or a home subscriber server HSS, and the second device includes:
a processor, configured to obtain an authentication parameter, where the authentication parameter is a token or a User Datagram Protocol UDP port number; where
the processor is further configured to encrypt the authentication parameter; and
the processor is further configured to perform integrity protection on a first message, where the first message includes a second message and the authentication parameter, and the second message includes the encrypted authentication parameter; or the processor is further configured to perform integrity protection on a first message, where the first message includes the second message, and the second message includes the encrypted authentication parameter; or the processor is further configured to: perform integrity protection on a second message, and generate a first message, where the first message includes the second message and the authentication parameter, and the second message includes the encrypted authentication parameter; or the processor is further configured to: perform integrity protection on a second message, and generate a first message, where the first message includes the second message, and the second message includes the encrypted authentication parameter; or the processor is further configured to: perform integrity protection on a second message, and generate a first message, where the first message includes the second message and the authentication parameter; and
a transmitter, configured to send the first message to a first device, so that the first device obtains the second message or the authentication parameter from the first message.

With reference to the tenth aspect, in a first implementable manner, the processor is specifically configured to:
generate the authentication parameter corresponding to an identifier of the terminal.

With reference to the tenth aspect, in a second implementable manner, the processor is specifically configured to:
receive the authentication parameter sent by the first device; or receive the first message sent by the first device, and perform a decryption operation on the encrypted authentication parameter, where the first message includes a third message, and the third message includes the encrypted authentication parameter.

With reference to any one of the fourth aspect, the first implementable manner, or the second implementable manner, in a third implementable manner, the authentication parameter is used to perform verification on or identify an authorized Wireless Local Area Network Control Protocol application.

With reference to any one of the tenth aspect, or the first implementable manner to the third implementable manner, in a fourth implementable manner, the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

With reference to any one of the tenth aspect, or the first implementable manner to the fourth implementable manner, in a fifth implementable manner, the first message is a message borne in the DIAMETER protocol.

With reference to any one of the tenth aspect, or the first implementable manner to the fifth implementable manner, in a sixth implementable manner, the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

According to an eleventh aspect, a communications system is provided and includes:
the first device described above, the terminal described above, and the second device described above; where
the second device is configured to: obtain an authentication parameter, where the authentication parameter is a token or a User Datagram Protocol UDP port number;
encrypt the authentication parameter;
perform integrity protection on a first message, where the first message includes a second message and the authentication parameter, and the second message includes the encrypted authentication parameter; or perform integrity protection on a first message, where the first message includes the second message, and the second message includes the encrypted authentication parameter; or perform integrity protection on a second message, and generate a first message, where the first message includes the second message and the authentication parameter, and the second message includes the encrypted authentication parameter; or perform integrity protection on a second message, and generate a first message, where the first message includes the second message, and the second message includes the encrypted authentication parameter; or perform integrity protection on a second message, and generate a first message, where the first message includes the second message and the authentication parameter; and
send the first message to the first device, so that the first device obtains the second message or the authentication parameter from the first message;
the first device is configured to: receive the first message sent by the second device, where the first message includes the second message and the authentication parameter, the authentication parameter is a token or a User Datagram Protocol UDP port number, and the second message includes the encrypted authentication parameter; or receive the first message sent by the second device, where the first message includes the second message, the second message includes the encrypted authentication parameter, and the authentication parameter is a token or a User Datagram Protocol UDP port number; or receive the first message sent by the second device, where the first message includes the second message and the authentication parameter; and
send the second message to the terminal; and
the terminal is configured to: receive the second message sent by the first device, where the second message includes the encrypted authentication parameter, and the authentication parameter is a token or a User Datagram Protocol UDP port number; or generate the authentication parameter corresponding to an identifier of the terminal.

The embodiments of the present invention provide a method for accessing a communications network by a terminal, an apparatus, and a communications system. A first device receives a first message sent by a second device, where the first message includes a second message and an authentication parameter, and the authentication parameter is a token or a User Datagram Protocol UDP port number; or the first message includes a second message, and the second message includes the encrypted authentication parameter; or the first message includes the second message and an authentication parameter; and then sends the second message to a terminal. In comparison with the prior art, a terminal sends, to a first device, a packet data network connection request message that carries an authentication parameter, so that the first device can identify whether the packet data network connection request message is a message of a Wireless Local Area Network Control Protocol application or a packet data network connection request message of a malicious application. This effectively reduces a resource waste on a network side that is caused when WLCP is triggered by a malicious application on the terminal.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart 1 of a method for accessing a communications network by a terminal according to an embodiment of the present invention;
FIG. 1a is a flowchart 2 of a method for accessing a communications network by a terminal according to an embodiment of the present invention;
FIG. 1b is a flowchart 3 of a method for accessing a communications network by a terminal according to an embodiment of the present invention;
FIG. 2 is a flowchart 4 of a method for accessing a communications network by a terminal according to an embodiment of the present invention;
FIG. 2a is a flowchart 5 of a method for accessing a communications network by a terminal according to an embodiment of the present invention;
FIG. 2b is a flowchart 6 of a method for accessing a communications network by a terminal according to an embodiment of the present invention;
FIG. 3 is a flowchart 7 of a method for accessing a communications network by a terminal according to an embodiment of the present invention;
FIG. 3a is a flowchart 8 of a method for accessing a communications network by a terminal according to an embodiment of the present invention;
FIG. 3b is a flowchart 9 of a method for accessing a communications network by a terminal according to an embodiment of the present invention;
FIG. 3c is a flowchart 10 of a method for accessing a communications network by a terminal according to an embodiment of the present invention;
FIG. 4 is a flowchart 11 of a method for accessing a communications network by a terminal according to an embodiment of the present invention;
FIG. 4a is a flowchart 12 of a method for accessing a communications network by a terminal according to an embodiment of the present invention;
FIG. 5 is a flowchart 13 of a method for accessing a communications network by a terminal according to an embodiment of the present invention;
FIG. 5a is a flowchart 14 of a method for accessing a communications network by a terminal according to an embodiment of the present invention;
FIG. 6 is a schematic structural diagram 1 of a first device according to an embodiment of the present invention;
FIG. 7 is a schematic structural diagram 2 of a first device according to an embodiment of the present invention;
FIG. 8 is a schematic structural diagram 3 of a first device according to an embodiment of the present invention;
FIG. 9 is a schematic structural diagram 4 of a first device according to an embodiment of the present invention;
FIG. 10 is a schematic structural diagram 5 of a first device according to an embodiment of the present invention;
FIG. 11 is a schematic structural diagram 1 of a terminal according to an embodiment of the present invention;
FIG. 12 is a schematic structural diagram 2 of a terminal according to an embodiment of the present invention;
FIG. 13 is a schematic structural diagram 1 of a second device according to an embodiment of the present invention;
FIG. 14 is a schematic diagram 1 of a communications system according to an embodiment of the present invention;
FIG. 15 is a schematic structural diagram 6 of a first device according to an embodiment of the present invention;
FIG. 16 is a schematic structural diagram 7 of a first device according to an embodiment of the present invention;
FIG. 17 is a schematic structural diagram 3 of a terminal according to an embodiment of the present invention;
FIG. 18 is a schematic structural diagram 4 of a terminal according to an embodiment of the present invention;
FIG. 19 is a schematic structural diagram 2 of a second device according to an embodiment of the present invention;
FIG. 20 is a schematic diagram 2 of a communications system according to an embodiment of the present invention;
FIG. 21 is a flowchart 15 of a method for accessing a communications network by a terminal according to an embodiment of the present invention;
FIG. 21a is a flowchart 16 of a method for accessing a communications network by a terminal according to an embodiment of the present invention;
FIG. 22 is a schematic structural diagram 8 of a first device according to an embodiment of the present invention;
FIG. 23 is a schematic structural diagram 9 of a first device according to an embodiment of the present invention;
FIG. 24 is a schematic structural diagram 10 of a first device according to an embodiment of the present invention;
FIG. 25 is a schematic structural diagram 11 of a first device according to an embodiment of the present invention;
FIG. 26 is a schematic structural diagram 12 of a first device according to an embodiment of the present invention;
FIG. 27 is a schematic structural diagram 13 of a first device according to an embodiment of the present invention;
FIG. 28 is a schematic structural diagram 5 of a terminal according to an embodiment of the present invention;
FIG. 29 is a schematic structural diagram 6 of a terminal according to an embodiment of the present invention;
FIG. 30 is a schematic structural diagram 3 of a second device according to an embodiment of the present invention;
FIG. 31 is a schematic structural diagram 4 of a second device according to an embodiment of the present invention;
FIG. 32 is a schematic structural diagram 14 of a first device according to an embodiment of the present invention;
FIG. 33 is a schematic structural diagram 7 of a terminal according to an embodiment of the present invention;
FIG. 34 is a schematic structural diagram 8 of a terminal according to an embodiment of the present invention;
FIG. 35 is a schematic structural diagram 5 of a second device according to an embodiment of the present invention;
FIG. 36 is a schematic structural diagram 6 of a second device according to an embodiment of the present invention; and
FIG. 37 is a schematic diagram 3 of a communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A first device described in the present invention is a trusted wireless local area network access gateway TWAG, or the first device may include a TWAG and a trusted wireless local area network authentication, authorization, and accounting service proxy TWAP.

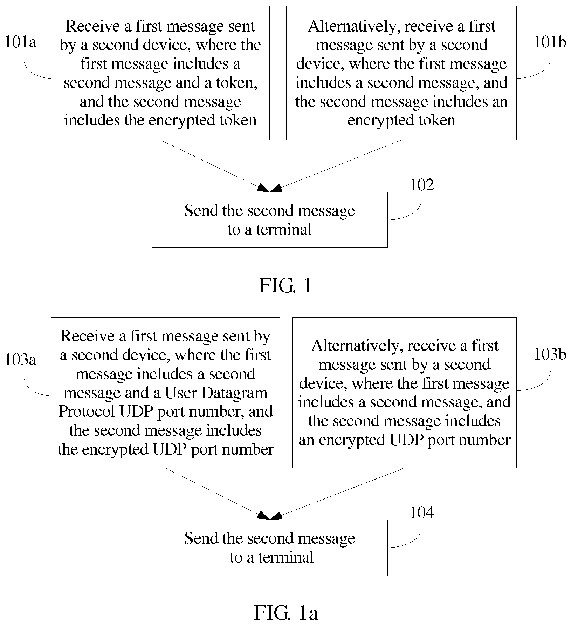

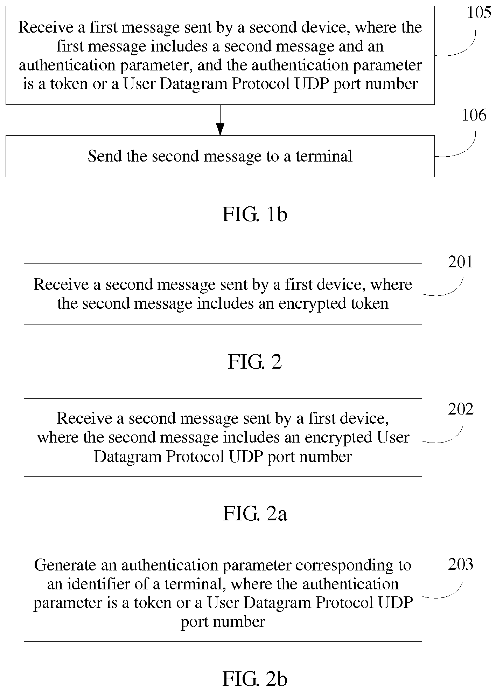

An embodiment of the present invention provides a method for accessing a communications network by a terminal. The method is applied to a first device, and the first device is a trusted wireless local area network access gateway TWAG, or the first device includes a TWAG and a trusted wireless local area network authentication, authorization, and accounting service proxy TWAP. As shown in FIG. 1, the method includes the following steps:
Step 101a: Receive a first message sent by a second device, where the first message includes a second message and a token, and the second message includes an encrypted token.

Optionally, after the first message sent by the second device is received, the token corresponding to an identifier of the terminal and the identifier of the terminal may be read from the first message, and the token corresponding to the identifier of the terminal and the identifier of the terminal may be stored.

Optionally, before the first message sent by the second device is received, the token corresponding to an identifier of the terminal may be generated, then the token corresponding to the identifier of the terminal and the identifier of the terminal may be stored, and then the token may be sent to the second device. Alternatively, a DIAMETER-EAP-REQ-Command (DIAMETER-Extensible Authentication Protocol-Request-Command, DIAMETER-Extensible Authentication Protocol-request-command) message or an AAA (Authentication Authorization Accounting, authentication, authorization, and accounting) message may be sent to the second device. The authentication, authorization, and accounting message includes an EAP-RSP (Extensible Authentication Protocol-Response, Extensible Authentication Protocol-response) message or an Extensible Authentication Protocol-identity message (EAP-Identity), the DIAMETER-Extensible Authentication Protocol-request-command message includes the token, the Extensible Authentication Protocol-response message includes the token, and the Extensible Authentication Protocol-identity message includes the token.

Step 101b: Alternatively, receive a first message sent by a second device, where the first message includes the second message, and the second message includes the encrypted token.

Step 102: Send the second message to the terminal.

After the second message is sent to the terminal, a packet data network connection request message sent by the terminal may be received. The packet data network connection request message includes the token, and the packet data network connection request message is a packet data network connection establishment request message, a packet data network disconnection request message, or a packet data network connection release request message. Then, it is verified whether the token that is in the packet data network connection request message and corresponding to the identifier of the terminal is the same as a locally stored token corresponding to the identifier of the terminal. If the token that is in the packet data network connection request message and corresponding to the identifier of the terminal is the same as the locally stored token corresponding to the identifier of the terminal, a packet data network connection response message is sent to the terminal. The packet data network connection response message is a packet data network connection establishment response message, a packet data network disconnection response message, or a packet data network connection release response message, so that the terminal establishes a connection to the first device and accesses a packet data network, or a connection between the terminal and the first device is released. It should be noted that before it is verified whether the token that is in the packet data network connection request message and corresponding to the identifier of the terminal is the same as the locally stored token corresponding to the identifier of the terminal, it may be further checked whether the packet data network connection request message includes the token.

In this way, a first message sent by a second device is first received. where the first message includes a second message and a token, and the second message includes the encrypted token; or a first message sent by a second device is received, where the first message includes the second message, and the second message includes the encrypted token. Then, the second message is sent to the terminal. This effectively reduces a resource waste on a network side that is caused when WLCP is triggered by a malicious application on the terminal.

An embodiment of the present invention provides a method for accessing a communications network by a terminal. The method is applied to a first device, and the first device is a trusted wireless local area network access gateway TWAG, or the first device includes a TWAG and a trusted wireless local area network authentication, authorization, and accounting service proxy TWAP. As shown in FIG. 1a, the method includes the following steps:
Step 103a: Receive a first message sent by a second device, where the first message includes a second message and a User Datagram Protocol UDP port number, and the second message includes the encrypted UDP port number.

Step 103b: Alternatively, receive a first message sent by a second device, where the first message includes the second message, and the second message includes the encrypted UDP port number.

Step 104: Send the second message to the terminal.

In this way, a first device receives a first message sent by a second device, where the first message includes a second message and a UDP port number, and the second message includes the encrypted UDP port number; and then sends the second message to a terminal, so that a WLCP application on the terminal obtains the UDP port number. This effectively reduces a resource waste on a network side that is caused when WLCP is triggered by a malicious application on the terminal.

An embodiment of the present invention provides a method for accessing a communications network by a terminal. The method is applied to a first device, and the first device is a trusted wireless local area network access gateway TWAG, or the first device includes a TWAG and a trusted wireless local area network authentication, authorization, and accounting service proxy TWAP. As shown in FIG. 1b, the method includes the following steps:
Step 105: Receive a first message sent by a second device, where the first message includes a second message and an authentication parameter, and the authentication parameter is a token or a User Datagram Protocol UDP port number.

Step 106: Send the second message to the terminal.

In this way, a first device receives a first message sent by a second device, where the first message includes a second message and an authentication parameter, and the authentication parameter is generated by a terminal, so that a WLCP application on the terminal obtains a UDP port number or a token. This effectively reduces a resource waste on a network side that is caused when WLCP is triggered by a malicious application on the terminal.

An embodiment of the present invention provides a method for accessing a communications network by a terminal. The method is applied to a terminal. As shown in FIG. 2, the method includes the following step:
Step 201: Receive a second message sent by a first device, where the second message includes the encrypted token.

After the second message sent by the first device is received, a packet data network connection request message may be sent to the first device, where the packet data network connection request message includes the token, and the packet data network connection request message is a packet data network connection establishment request message, a packet data network disconnection request message, or a packet data network connection release request message; and then a packet data network connection response message sent by the first device is received, where the packet data network connection response message is a packet data network connection establishment response message, a packet data network disconnection response message, or a packet data network connection release response message, to establish a connection to the first device and access a packet data network, or release a connection to the first device.

In this way, a second message sent by a first device is received, and the second message includes the encrypted token. This effectively reduces a resource waste on a network side that is caused when WLCP is triggered by a malicious application on a terminal.

An embodiment of the present invention provides a method for accessing a communications network by a terminal. The method is applied to a terminal. As shown in FIG. 2a, the method includes the following step:
Step 202: Receive a second message sent by a first device, where the second message includes an encrypted User Datagram Protocol UDP port number.

In this way, a terminal may obtain a UDP port number from a received second message sent by a first device, so that a WLCP application on the terminal obtains the UDP port number. This effectively reduces a resource waste on a network side that is caused when WLCP is triggered by a malicious application on the terminal.

An embodiment of the present invention provides a method for accessing a communications network by a terminal. The method is applied to a terminal. As shown in FIG. 2b, the method includes the following step:
Step 203: Generate an authentication parameter corresponding to an identifier of the terminal, where the authentication parameter is a token or a User Datagram Protocol UDP port number.

In this way, a terminal may generate a UDP port number or a token corresponding to an identifier of the terminal, so that a WLCP application on the terminal obtains the UDP port number. This effectively reduces a resource waste on a network side that is caused when WLCP is triggered by a malicious application on the terminal.

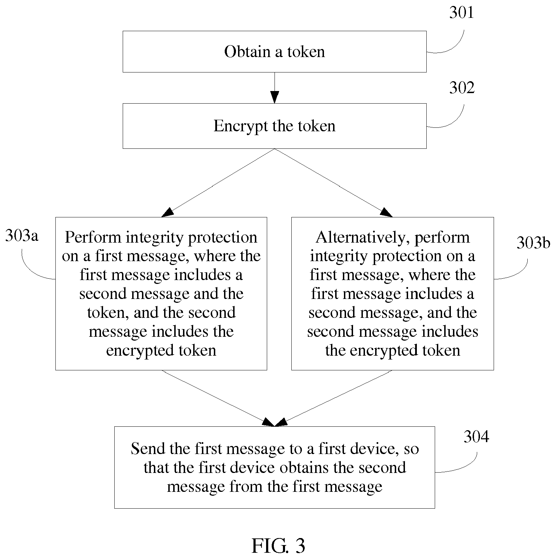

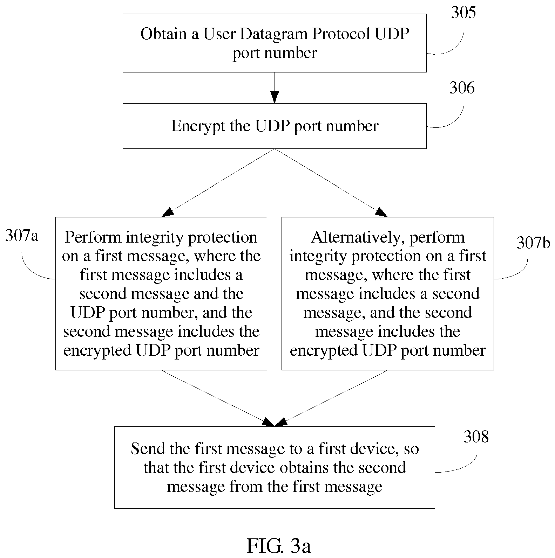

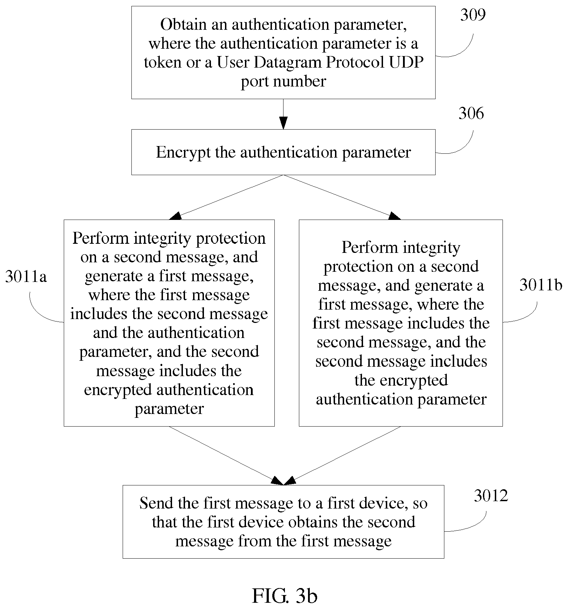

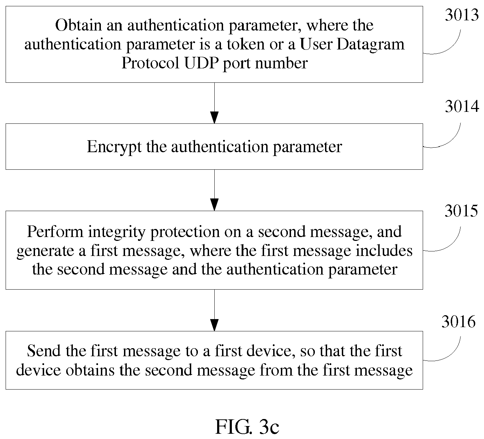

An embodiment of the present invention provides a method for accessing a communications network by a terminal. The method is applied to a second device, and the second device is an authentication, authorization, and accounting server AAA or a home subscriber server HSS. As shown in FIG. 3, the method includes the following steps:
Step 301: Obtain a token.

The token may be first generated according to an identifier of the terminal, and then the token may be locally obtained; or a token sent by the first device is received, where the token may be obtained from a received DIAMETER-Extensible Authentication Protocol-request-command message DIAMETER-EAP-REQ-Command or a received authentication, authorization, and accounting message AAA sent by the first device, the authentication, authorization, and accounting message includes an Extensible Authentication Protocol-response message EAP-RSP or an Extensible Authentication Protocol-identity message EAP-Identity, the DIAMETER-Extensible Authentication Protocol-request-command message includes the token, the Extensible Authentication Protocol-response message includes the token, and the Extensible Authentication Protocol-identity message includes the token.

Step 302: Encrypt the token.

Step 303a: Perform integrity protection on a first message, where the first message includes a second message and the token, and the second message includes the encrypted token.

Step 303b: Alternatively, perform integrity protection on a first message, where the first message includes the second message, and the second message includes the encrypted token.

Step 304: Send the first message to a first device, so that the first device obtains the second message from the first message.

In this way, a token is first obtained; then the token is encrypted; integrity protection is performed on a first message, where the first message includes a second message and the token, and the second message includes the encrypted token; or integrity protection is performed on a first message, where the first message includes the second message, and the second message includes the encrypted token; and then the first message is sent to a first device, so that the first device obtains the second message from the first message. This effectively reduces a resource waste on a network side that is caused when WLCP is triggered by a malicious application on a terminal.

An embodiment of the present invention provides a method for accessing a communications network by a terminal. The method is applied to a second device, and the second device is an authentication, authorization, and accounting server AAA or a home subscriber server HSS. As shown in FIG. 3a, the method includes the following steps:
Step 305: Obtain a User Datagram Protocol UDP port number.

Step 306: Encrypt the UDP port number.

Step 307a: Perform integrity protection on a first message, where the first message includes a second message and the UDP port number, and the second message includes the encrypted UDP port number.

Step 307b: Alternatively, perform integrity protection on a first message, where the first message includes the second message, and the second message includes the encrypted UDP port number.

Step 308: Send the first message to a first device, so that the first device obtains the second message from the first message.

In this way, a first device encrypts an obtained UDP port number, performs integrity protection on a first message, and sends the first message to a first device, so that the first device sends, to a terminal, a second message that carries the UDP port number, and a WLCP application on the terminal obtains the UDP port number. This effectively reduces a resource waste on a network side that is caused when WLCP is triggered by a malicious application on the terminal.

An embodiment of the present invention provides a method for accessing a communications network by a terminal. The method is applied to a second device, and the second device is an authentication, authorization, and accounting server AAA or a home subscriber server HSS. As shown in FIG. 3b, the method includes the following steps:
Step 309: Obtain an authentication parameter, where the authentication parameter is a token or a User Datagram Protocol UDP port number.

Step 3010: Encrypt the authentication parameter.

Step 3011a: Perform integrity protection on a second message, and generate a first message, where the first message includes the second message and the authentication parameter, and the second message includes the encrypted authentication parameter.

Step 3011b: Perform integrity protection on a second message, and generate a first message, where the first message includes the second message, and the second message includes the encrypted authentication parameter.

Step 3012: Send the first message to a first device, so that the first device obtains the second message from the first message.

In this way, a first device encrypts an obtained UDP port number, performs integrity protection on a second message, generates a first message, and sends the first message to a first device, so that the first device sends, to a terminal, the second message that carries the UDP port number, and a WLCP application on the terminal obtains an authentication parameter. This effectively reduces a resource waste on a network side that is caused when WLCP is triggered by a malicious application on the terminal.

An embodiment of the present invention provides a method for accessing a communications network by a terminal. The method is applied to a second device, and the second device is an authentication, authorization, and accounting server AAA or a home subscriber server HSS. As shown in FIG. 3c, the method includes the following steps:
Step 3013: Obtain an authentication parameter, where the authentication parameter is a token or a User Datagram Protocol UDP port number.

Step 3014: Encrypt the authentication parameter.

Step 3015: Perform integrity protection on a second message, and generate a first message, where the first message includes the second message and the authentication parameter.

Step 3016: Send the first message to a first device, so that the first device obtains the second message from the first message.

In this way, a second device obtains an authentication parameter, encrypts the authentication parameter, generates a first message, and sends the first message to a first device, so that a WLCP application on a terminal obtains a UDP port number or a token. This effectively reduces a resource waste on a network side that is caused when WLCP is triggered by a malicious application on the terminal.

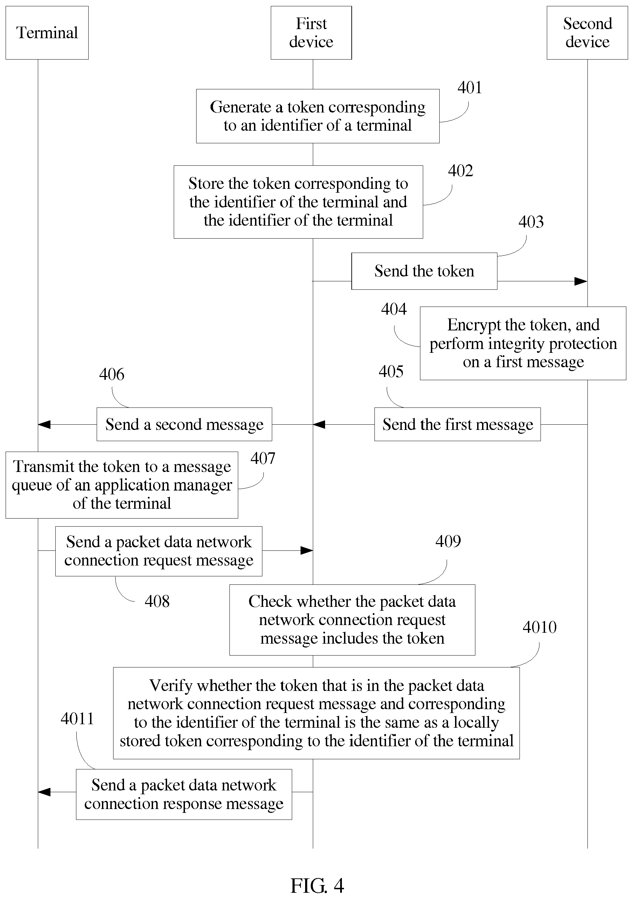

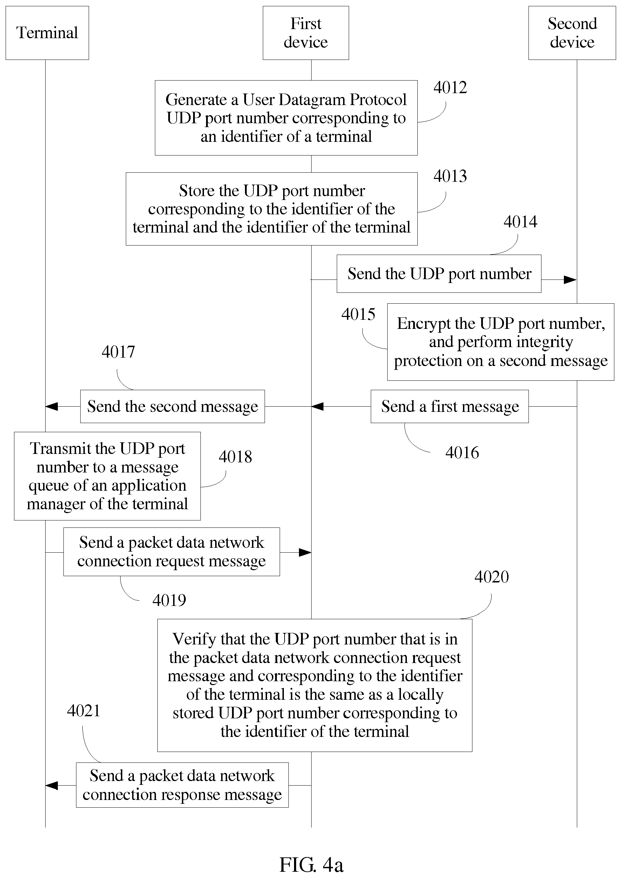

An embodiment of the present invention provides a method for accessing a communications network by a terminal. The method is applied to a terminal, a first device, and a second device, it is assumed that the first device is a trusted wireless local area network access gateway TWAG, or the first device includes a TWAG and a trusted wireless local area network authentication, authorization, and accounting service proxy TWAP, and it is assumed that the second device is an authentication, authorization, and accounting server (AAA) or a home subscriber server (HSS). As shown in FIG. 4, the method includes the following steps:
Step 401: The first device generates a token corresponding to an identifier of the terminal.

First, the terminal performs normal network attachment, and an EAP (Extensible Authentication Protocol, Extensible Authentication Protocol) message is exchanged between the terminal and the second device, so that the first device can obtain the identifier of the terminal from the second device. Then the first device may generate the token (Token) corresponding to the identifier of the terminal, and the token is used to perform verification on or identify a Wireless Local Area Network Control Protocol application (WLCP APP) on the terminal.

Particularly, each time the terminal needs to access a communications network, the first device may obtain the identifier of the terminal from the second device, and re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI (International Mobile Subscriber Identification Number, international mobile subscriber identity), a MAC (Media Access Control, Media Access Control layer) address, or an IP (Internet Protocol, Internet Protocol) address. The token may be generated by means of definition by an operator, and uniqueness of the generated token needs to be ensured. A specific manner of generating a token belongs to the prior art, and details are not described herein in this embodiment of the present invention.

Step 402: The first device stores the token corresponding to the identifier of the terminal and the identifier of the terminal.

Step 403: The first device sends the token to the second device.

The first device sends a DIAMETER-Extensible Authentication Protocol-request-command message to the second device. The DIAMETER-Extensible Authentication Protocol-request-command message bears an Extensible Authentication Protocol payload (EAP-payload), and the Extensible Authentication Protocol payload includes the token generated by the first device according to the identifier of the terminal.

Alternatively, the first device may send an authentication, authorization, and accounting message to the second device. The authentication, authorization, and accounting message includes an Extensible Authentication Protocol-response message (EAP-RSP) or an Extensible Authentication Protocol-identity message (EAP-Identity), the Extensible Authentication Protocol-response message includes the token, and the Extensible Authentication Protocol-identity message includes the token.

Step 404: The second device encrypts the token, and performs integrity protection on a first message.

The second device receives the token sent by the first device; or the second device may receive the DIAMETER-Extensible Authentication Protocol-request-command message or the authentication, authorization, and accounting message sent by the first device. The DIAMETER-Extensible Authentication Protocol-request-command message includes the token generated by the first device according to the identifier of the terminal, the authentication, authorization, and accounting message includes the Extensible Authentication Protocol-response message (EAP-RSP) or the Extensible Authentication Protocol-identity message (EAP-Identity), the Extensible Authentication Protocol-response message includes the token, and the Extensible Authentication Protocol-identity message includes the token. The token is used to perform verification on or identify the Wireless Local Area Network Control Protocol application on the terminal. First, the Extensible Authentication Protocol message is parsed to obtain the token, and then the second device may generate a key and encrypt the token to prevent an unauthorized user from intercepting and seeing the token, and the key may be a TEK (Transient EAP Keys, transient EAP key).

It should be noted that the second device may encrypt the token in a CBC (Cipher Block Chaining, cipher block chaining) mode by using the AES (advanced Encryption standard, Advanced Encryption Standard) and a 128-bit key.

After encrypting the token, the second device generates a second message, where the second message includes the encrypted token; encapsulates the second message to generate the first message; and performs integrity protection on the first message to prevent another unauthorized user from intercepting and modifying the first message, where the first message includes the second message.

It should be noted that the second device may generate message authentication code according to a MAC (message authentication code, message authentication code) algorithm HMAC-SHA1-128, an authentication key, and the first message. The second message is any one of an EAP-AKA'-Notification (Extensible Authentication Protocol-Authentication and Key Agreement'-Notification, Extensible Authentication Protocol-Authentication and Key Agreement'-notification) message, an Extensible Authentication Protocol-Authentication and Key Agreement'-identity message (EAP-AKA'-Identity), or an EAP-REQ (Extensible Authentication Protocol-Request, Extensible Authentication Protocol-request) message; or particularly, the second message may be another Extensible Authentication Protocol payload (EAP-payload) message.

Step 405: The second device sends the first message to the first device.

It should be noted that a message is exchanged between the second device and the first device by using the DIAMETER protocol, and the first message is a message borne in the DIAMETER protocol. The first message may be either of a DIAMETER-Extensible Authentication Protocol-answer-command message (DIAMETER-EAP-Answer-Command) and an authentication, authorization, and accounting message (AAA), the DIAMETER-Extensible Authentication Protocol-answer-command message bears an Extensible Authentication Protocol payload (EAP-payload), the Extensible Authentication Protocol payload (EAP-payload) may be any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ), and the authentication, authorization, and accounting message includes any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 406: The first device sends a second message to the terminal.

After receiving the first message sent by the second device, the first device first parses the first message to obtain the second message, and then sends the second message to the terminal.

The first message includes the second message, and the second message includes the encrypted token. The second message is any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 407: The terminal transmits the token to a message queue of an application manager of the terminal.

After receiving the second message sent by the first device, the terminal first parses the second message to obtain the encrypted token, where the second message includes the encrypted token; decrypts the token to obtain the token; and then transmits the token to the message queue of the application manager of the terminal, so that the Wireless Local Area Network Control Protocol application calls the token from the message queue by using an API (Application Programming Interface, application programming interface) between the Wireless Local Area Network Control Protocol application and an operating system of the terminal. In this way, a malicious application on the terminal cannot use the private API between the Wireless Local Area Network Control Protocol application on the terminal and the operating system; therefore, the malicious application cannot call the token, and when the malicious application calls a UDP port used by the WLCP APP, to send a packet data network connection release request message to the first device to trigger WLCP, the first device determines that the packet data network connection release request message does not include the token, and therefore, the first device considers that the packet data network connection release request message is an unauthorized packet data network connection release request message, and discards the packet data network connection release request message. Therefore, a resource waste on a network side that is caused when WLCP is triggered by a malicious application on the terminal is effectively reduced, and an intention of maliciously breaking a PDN connection by the malicious application is effectively reduced.

The token is used to perform verification on or identify the Wireless Local Area Network Control Protocol application on the terminal. The second message includes the encrypted token. The second message is any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 408: The terminal sends a packet data network connection request message to the first device.

The packet data network connection request (PDN Connection Request) message includes the token and the identifier of the terminal. The packet data network connection request message is a packet data network connection establishment request message, a packet data network disconnection request message, or a packet data network connection release request message.

Step 409: The first device checks whether the packet data network connection request message includes the token.

After receiving the packet data network connection request message sent by the terminal, the first device parses the packet data network connection request message to check whether the packet data network connection establishment message includes the token.

If the packet data network connection request message includes the token, step 4010 is performed.

If the packet data network connection request message does not include the token, the first device considers that the packet data network connection request message is an unauthorized packet data network connection request message, and the first device discards or does not process the packet data network connection request message.

Step 4010: The first device verifies whether the token that is in the packet data network connection request message and corresponding to the identifier of the terminal is the same as a locally stored token corresponding to the identifier of the terminal.

The first device first locally obtains, according to the identifier of the terminal that is in the packet data network connection request message, an identifier that is of a terminal and is the same as the identifier of the terminal, then obtains, according to the locally obtained identifier of the terminal, a token corresponding to the identifier of the terminal, and verifies whether the token that is in the packet data network connection request message and corresponding to the identifier of the terminal is the same as the locally stored token corresponding to the identifier of the terminal, and if the token that is in the packet data network connection request message and corresponding to the identifier of the terminal is the same as the locally stored token corresponding to the identifier of the terminal, the first device considers that the packet data network connection request message is an authorized packet data network connection request message, and performs step 4011.

Step 4011: The first device sends a packet data network connection response message to the terminal.

The first device sends a packet data network connection establishment response message to the terminal, so that the terminal receives the packet data network connection establishment response message sent by the first device, to establish a connection to the first device and access a packet data network. The packet data network connection response message is a packet data network connection establishment response message, a packet data network disconnection response message, or a packet data network connection release response message.

It should be noted that a sequence of the steps of the method for accessing a communications network by a terminal provided in this embodiment of the present invention may be properly adjusted, and the steps may also be increased or reduced accordingly according to a situation. For example, after step 408, step 409 may not be performed, and step 4010 may be directly performed, that is, after the terminal sends the packet data network connection request message to the first device, the first device verifies whether the token that is in the packet data network connection request message and corresponding to the identifier of the terminal is the same as the locally stored token corresponding to the identifier of the terminal. Any variation readily figured out by a person skilled in the art within the technical scope disclosed in the present invention shall fall within the protection scope of the present invention, and therefore, details are not described herein.

Particularly, the second device described in this embodiment of the present invention performs integrity protection on the first message, and also performs integrity protection on the second message in the first message, or the second device may separately perform integrity protection on the first message and the second message.

According to the method for accessing a communications network by a terminal described in this embodiment of the present invention, a first device first generates a token corresponding to an identifier of a terminal, stores the token corresponding to the identifier of the terminal and the identifier of the terminal, and sends an Extensible Authentication Protocol message to a second device, where the Extensible Authentication Protocol message includes the token. Then the second device obtains the token, encrypts the token, generates a first message, performs integrity protection on the first message, and sends the first message to the first device, where the first message includes a second message, and the second message includes the encrypted token. After receiving the first message, the first device sends the second message to the terminal. After receiving the second message, the terminal transmits the token to a message queue of an application manager of the terminal, a Wireless Local Area Network Control Protocol application calls the token, and the terminal sends a packet data network connection request message to the first device. The first device checks that the packet data network connection request message includes the token, verifies that the token that is in the packet data network connection request message and corresponding to the identifier of the terminal is the same as a locally stored token corresponding to the identifier of the terminal, and sends a packet data network connection response message to the terminal. In comparison with the prior art, a terminal sends, to a first device, a packet data network connection request message that carries a token, so that the first device can identify whether the packet data network connection request message is a message of a Wireless Local Area Network Control Protocol application or a packet data network connection request message of a malicious application. This effectively reduces a resource waste on a network side that is caused when WLCP is triggered by a malicious application on the terminal.

It should be noted that alternatively, a first device may generate a User Datagram Protocol (UDP) port number corresponding to an identifier of a terminal, so that the terminal sends, to the first device, a packet data network connection request message that carries the UDP port number, and the first device can identify whether the packet data network connection request message is a message of a Wireless Local Area Network Control Protocol application or a packet data network connection request message of a malicious application, to reduce a resource waste on a network side that is caused when WLCP is triggered by a malicious application on the terminal.

As shown in FIG. 4a, a method for accessing a communications network by a terminal described in an embodiment of the present invention includes the following steps:
Step 4012: A first device generates a User Datagram Protocol UDP port number corresponding to an identifier of a terminal.

Step 4013: The first device stores the UDP port number corresponding to the identifier of the terminal and the identifier of the terminal.

Step 4014: The first device sends the UDP port number to a second device.

Step 4015: Encrypt the UDP port number, and perform integrity protection on the second message.

Step 4016: The second device sends the first message to the first device.

Step 4017: The first device sends the second message to the terminal.

Step 4018: Transmit the UDP port number to a message queue of an application manager of the terminal.

Step 4019: The terminal sends a packet data network connection request message to the first device.

Step 4020: The first device verifies that the UDP port number that is in the packet data network connection request message and corresponding to the identifier of the terminal is the same as a locally stored UDP port number corresponding to the identifier of the terminal.

Step 4021: The first device sends a packet data network connection response message to the terminal.

In this way, a terminal sends, to a first device, a packet data network connection request message that carries a UDP port number, so that the first device can identify whether the packet data network connection request message is a message of a Wireless Local Area Network Control Protocol application or a packet data network connection request message of a malicious application. This effectively reduces a resource waste on a network side that is caused when WLCP is triggered by a malicious application on the terminal. Detailed content in steps is described in the embodiments of the present invention. Details are not described herein. A difference lies in that a token described in steps in the embodiments of the present invention may be changed into a UDP port number.

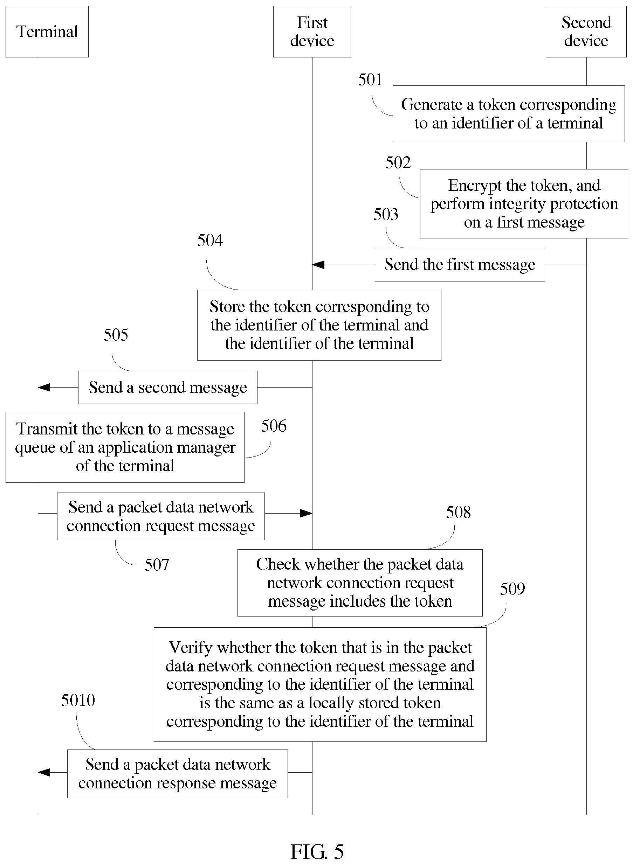

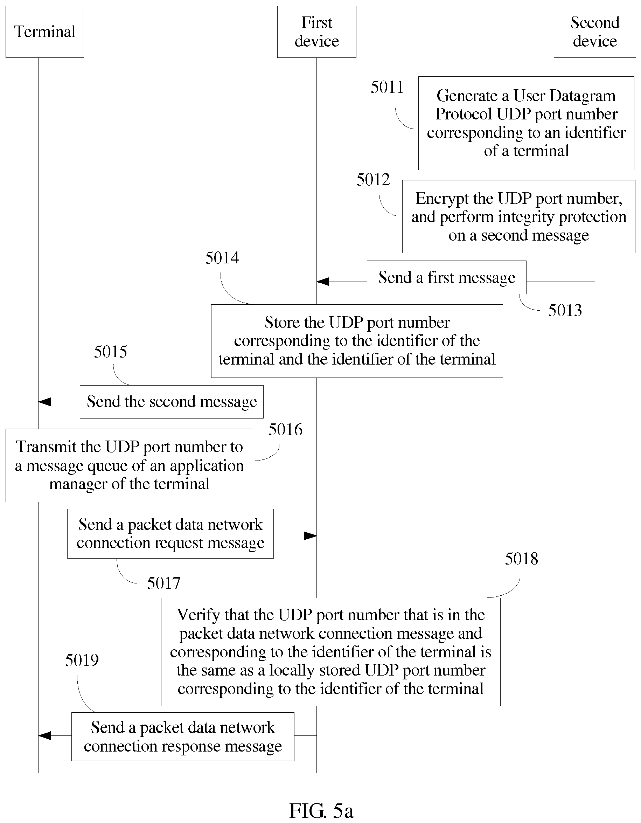

An embodiment of the present invention provides a method for accessing a communications network by a terminal. The method is applied to a terminal, a first device, and a second device, it is assumed that the first device is a trusted wireless local area network access gateway TWAG, and the second device is an authentication, authorization, and accounting server (AAA) or a home subscriber server (HSS) As shown in FIG. 5, the method includes the following steps:
Step 501: The second device generates a token corresponding to an identifier of the terminal.

First, the terminal performs normal network attachment, and an EAP (Extensible Authentication Protocol, Extensible Authentication Protocol) message is exchanged between the terminal and the second device, so that the second device obtains the identifier of the terminal. Then the second device may generate the token (Token) corresponding to the identifier of the terminal, and the token is used to perform verification on or identify a Wireless Local Area Network Control Protocol application (WLCP APP) on the terminal.

Particularly, each time the terminal needs to access a communications network, the second device may obtain the identifier of the terminal, and may re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI, a MAC address, or an IP address. The token may be generated by means of definition by an operator, and uniqueness of the generated token needs to be ensured. A specific manner of generating a token belongs to the prior art, and details are not described herein in this embodiment of the present invention.

Step 502: The second device encrypts the token, and performs integrity protection on a first message.

The second device may generate a key and encrypt the token to prevent another unauthorized user from intercepting and seeing the token, and the key may be a TEK (Transient EAP Keys, transient EAP key).

It should be noted that the second device may encrypt the token in a CBC (Cipher Block Chaining, cipher block chaining) mode by using the AES (advanced Encryption standard, Advanced Encryption Standard) and a 128-bit key.

After encrypting the token, the second device generates a second message, where the second message includes the encrypted token; encapsulates the second message and the token to generate the first message; and performs integrity protection on the first message to prevent another unauthorized user from intercepting and modifying the first message, where the first message includes the second message, the identifier of the terminal, and the token corresponding to the identifier of the terminal, and the token corresponding to the identifier of the terminal may be obtained by the first device.

It should be noted that the second device may generate message authentication code according to a MAC (message authentication code, message authentication code) algorithm HMAC-SHA1-128, an authentication key, and the first message. The second message is any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ); or particularly, the second message may be another Extensible Authentication Protocol payload (EAP-payload) message.

Step 503: The second device sends the first message to the first device.

It should be noted that a message is exchanged between the second device and the first device by using the DIAMETER protocol, and the first message is a message borne in the DIAMETER protocol. The first message may be either of a DIAMETER-Extensible Authentication Protocol-answer-command message (DIAMETER-EAP-Answer-Command) and an authentication, authorization, and accounting message (AAA), the DIAMETER-Extensible Authentication Protocol-answer-command message bears an Extensible Authentication Protocol payload (EAP-payload), the Extensible Authentication Protocol payload (EAP-payload) may be any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ), and the authentication, authorization, and accounting message includes any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 504: The first device stores the token corresponding to the identifier of the terminal and the identifier of the terminal.

After receiving the first message sent by the second device, the first device first parses the first message to obtain the token, and then the first device stores the token corresponding to the identifier of the terminal and the identifier of the terminal. The token is used to perform verification on or identify the Wireless Local Area Network Control Protocol application on the terminal.

Step 505: The first device sends a second message to the terminal.

After receiving the first message sent by the second device, the first device first parses the first message to obtain the second message, and then sends the second message to the terminal. The first message includes the second message, and the second message includes the encrypted token.

The second message is any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 506: The terminal transmits the token to a message queue of an application manager of the terminal.

After receiving the second message sent by the first device; the terminal first parses the second message to obtain the encrypted token, where the second message includes the encrypted token; decrypts the token to obtain the token; and then transmits the token to the message queue of the application manager of the terminal, so that the Wireless Local Area Network Control Protocol application calls the token from the message queue by using an API (Application Programming Interface, application programming interface) between the Wireless Local Area Network Control Protocol application and an operating system of the terminal. In this way, a malicious application on the terminal cannot use the private API between the Wireless Local Area Network Control Protocol application on the terminal and the operating system; therefore, the malicious application cannot call the token, and when the malicious application calls a UDP port used by the WLCP APP, to send a packet data network connection release request message to the first device to trigger WLCP, the first device determines that the packet data network connection release request message does not include the token, and therefore, the first device considers that the packet data network connection release request message is an unauthorized packet data network connection release request message, and discards the packet data network connection release request message. Therefore, a resource waste on a network side that is caused when WLCP is triggered by a malicious application on the terminal is effectively reduced, and an intention of maliciously breaking a PDN connection by the malicious application is effectively reduced.

The token is used to perform verification on or identify the Wireless Local Area Network Control Protocol application on the terminal. The second message includes the encrypted token. The second message is any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 507: The terminal sends a packet data network connection request message to the first device.

The packet data network connection request (PDN Connection Request) message includes the token and the identifier of the terminal. The packet data network connection request message is a packet data network connection establishment request message, a packet data network disconnection request message, or a packet data network connection release request message.

Step 508: The first device checks whether the packet data network connection request message includes the token.

After receiving the packet data network connection request message sent by the terminal, the first device parses the packet data network connection request message to check whether the packet data network connection request message includes the token.

If the packet data network connection request message includes the token, step 509 is performed.

If the packet data network connection request message does not include the token, the first device considers that the packet data network connection request message is an unauthorized packet data network connection request message, and the first device discards or does not process the packet data network connection request message.

Step 509: The first device verifies whether the token that is in the packet data network connection request message and corresponding to the identifier of the terminal is the same as a locally stored token corresponding to the identifier of the terminal.

The first device first locally obtains, according to the identifier of the terminal that is in the packet data network connection request message, an identifier that is of a terminal and is the same as the identifier of the terminal, then obtains, according to the locally obtained identifier of the terminal, a token corresponding to the identifier of the terminal, and verifies whether the token that is in the packet data network connection request message and corresponding to the identifier of the terminal is the same as the locally stored token corresponding to the identifier of the terminal, and if the token that is in the packet data network connection request message and corresponding to the identifier of the terminal is the same as the locally stored token corresponding to the identifier of the terminal, the first device considers that the packet data network connection request message is an authorized packet data network connection request message, and performs step 5010.

Step 5010: The first device sends a packet data network connection response message to the terminal.

The first device sends the packet data network connection response message to the terminal, so that the terminal receives the packet data network connection response message sent by the first device, to establish a connection to the second device by using the first device, and access a packet data network. The packet data network connection response message is a packet data network connection establishment response message, a packet data network disconnection response message, or a packet data network connection release response message.

It should be noted that a sequence of the steps of the method for accessing a communications network by a terminal provided in this embodiment of the present invention may be properly adjusted, and the steps may also be increased or reduced accordingly according to a situation. For example, after step 507, step 508 may not be performed, and step 509 may be directly performed, that is, after the terminal sends a packet data network connection release request message to the first device, the first device verifies whether the token that is in the packet data network connection release request message and corresponding to the identifier of the terminal is the same as the locally stored token corresponding to the identifier of the terminal. Any variation readily figured out by a person skilled in the art within the technical scope disclosed in the present invention shall fall within the protection scope of the present invention, and therefore, details are not described herein.

Particularly, the second device described in this embodiment of the present invention performs integrity protection on the first message, and also performs integrity protection on the second message in the first message, or the second device may separately perform integrity protection on the first message and the second message.

According to the method for accessing a communications network by a terminal described in this embodiment of the present invention, first, a second device generates a token corresponding to an identifier of a terminal; encrypts the token; generates a second message, where the second message includes the encrypted token; generates a first message; performs integrity protection on the first message, where the first message includes the second message, the identifier of the terminal, and the token corresponding to the identifier of the terminal; and sends the first message to a first device. The first device stores the token corresponding to the identifier of the terminal and the identifier of the terminal, and sends the second message to the terminal. After receiving the second message, the terminal transmits the token to a message queue of an application manager of the terminal, a Wireless Local Area Network Control Protocol application calls the token, and the terminal sends a packet data network connection request message to the first device. The first device checks that the packet data network connection request message includes the token, verifies whether the token that is in the packet data network connection message and corresponding to the identifier of the terminal is the same as a locally stored token corresponding to the identifier of the terminal, and sends a packet data network connection response message to the terminal. Compared with the prior art, a terminal sends, to a first device, a packet data network connection request message that carries a token, so that the first device can identify whether the packet data network connection request message is a message of a Wireless Local Area Network Control Protocol application or a packet data network connection message of a malicious application. This effectively reduces a resource waste on a network side that is caused when WLCP is triggered by a malicious application on the terminal.

It should be noted that alternatively, a second device may generate a User Datagram Protocol (UDP) port number corresponding to an identifier of a terminal, so that the terminal sends, to a first device, a packet data network connection request message that carries the UDP port number, and the first device can identify whether the packet data network connection request message is a message of a Wireless Local Area Network Control Protocol application or a packet data network connection request message of a malicious application, to reduce a resource waste on a network side that is caused when WLCP is triggered by a malicious application on the terminal.

As shown in FIG. 5a, a method for accessing a communications network by a terminal described in an embodiment of the present invention includes the following steps:
Step 5011: A second device generates a UDP port number corresponding to an identifier of a terminal.

Step 5012: The second device encrypts the UDP port number, and performs integrity protection on a second message.

Step 5013: The second device sends a first message to a first device.

Step 5014: The first device stores the UDP port number corresponding to the identifier of the terminal and the identifier of the terminal.

Step 5015: The first device sends the second message to the terminal.

Step 5016: The terminal transmits the UDP port number to a message queue of an application manager of the terminal.

Step 5017: The terminal sends a packet data network connection request message to the first device.

Step 5018: The first device verifies that the UDP port number that is in the packet data network connection message and corresponding to the identifier of the terminal is the same as a locally stored UDP port number corresponding to the identifier of the terminal.

Step 5019: The first device sends a packet data network connection response message to the terminal.

In this way, a terminal sends, to a first device, a packet data network connection request message that carries a UDP port number, so that the first device can identify whether the packet data network connection request message is a message of a Wireless Local Area Network Control Protocol application or a packet data network connection message of a malicious application. This effectively reduces a resource waste on a network side that is caused when WLCP is triggered by a malicious application on the terminal. Detailed content in steps is described in the embodiments of the present invention. Details are not described herein. A difference lies in that a token described in steps in the embodiments of the present invention may be changed into a UDP port number.

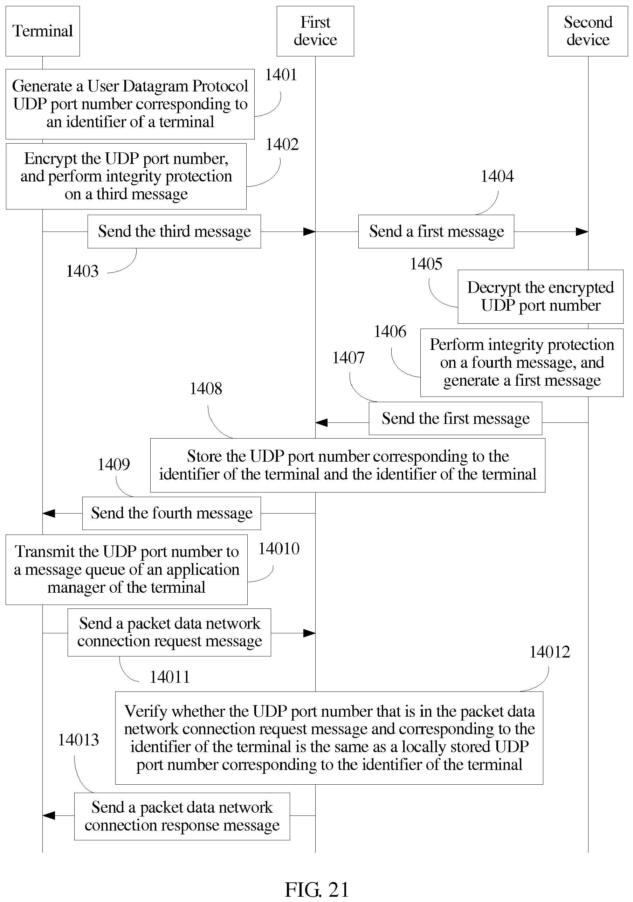

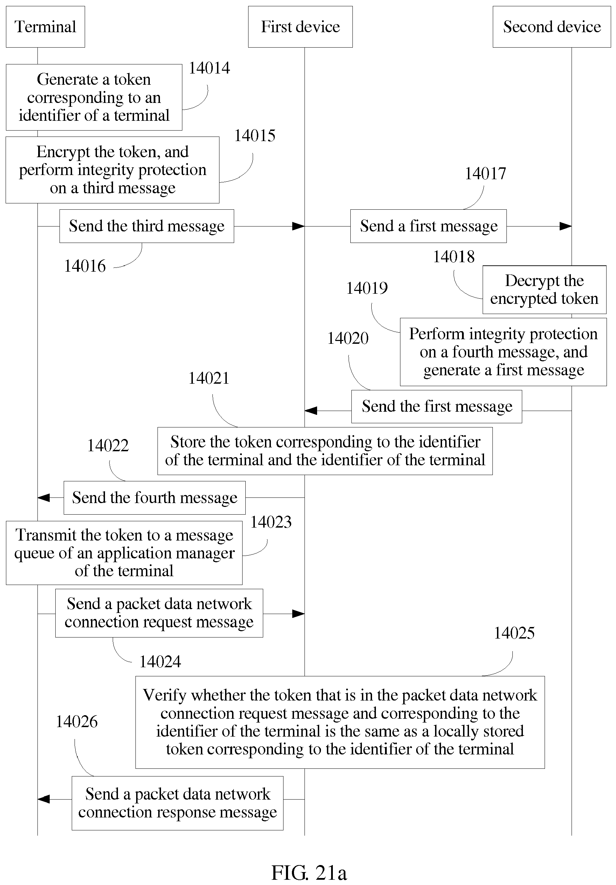

An embodiment of the present invention provides a method for accessing a communications network by a terminal. The method is applied to a terminal, a first device, and a second device, it is assumed that the first device is a trusted wireless local area network access gateway TWAG, and the second device is an authentication, authorization, and accounting server (AAA) or a home subscriber server (HSS). As shown in FIG. 21, the method includes the following steps:
Step 1401: The terminal generates a User Datagram Protocol UDP port number corresponding to an identifier of the terminal.

First, the terminal performs normal network attachment, and after authentication succeeds, may generate the UDP port number corresponding to the identifier of the terminal. The UDP port number is used to perform verification on or identify a Wireless Local Area Network Control Protocol application (WLCP APP) on the terminal.

Particularly, each time the terminal needs to access a communications network, the terminal may re-generate a UDP port number corresponding to the identifier of the terminal, to update the UDP port number of the terminal. A different UDP port number may be generated each time, and the communications network may be the 3^{rd} generation mobile communication cellular network or the 4^{th} generation mobile communication cellular network.

It should be noted that the identifier of the terminal may be an IMSI, a MAC address, or an IP address. The UDP port number may be generated by means of definition by an operator, and uniqueness of the generated UDP port number needs to be ensured. A specific manner of generating a UDP port number belongs to the prior art, and details are not described herein in this embodiment of the present invention.

Step 1402: The terminal encrypts the UDP port number, and performs integrity protection on a third message.

The terminal may generate a key and encrypt the UDP port number to prevent another unauthorized user from intercepting and seeing the UDP port number, and the key may be a TEK (Transient EAP Keys, transient EAP key).

It should be noted that the terminal may encrypt the UDP port number in a CBC (Cipher Block Chaining, cipher block chaining) mode by using the AES (advanced Encryption standard, Advanced Encryption Standard) and a 128-bit key.

The third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

After encrypting the UDP port number, the terminal generates the third message, where the third message includes the encrypted UDP port number; and performs integrity protection on the third message to prevent another unauthorized user from intercepting and modifying the third message.

Step 1403: The terminal sends the third message to the first device.

Step 1404: The first device sends a first message to the second device.

After receiving the third message sent by the terminal, the first device generates the first message, where the first message includes the third message. The first message is a message borne in the DIAMETER protocol.

Step 1405: The second device decrypts the encrypted UDP port number.

After receiving the first message sent by the first device, where the first message includes the third message, and the third message includes the encrypted UDP port number, the second device first parses the first message to obtain the third message on which integrity protection is performed, decrypts the third message to obtain the encrypted UDP port number, and then decrypts the encrypted UDP port number to obtain the UDP port number.

The third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

Step 1406: The second device performs integrity protection on a fourth message, and generates a first message.

The fourth message may be an Extensible Authentication Protocol-success (EAP-success) message, and the first message is a message borne in the DIAMETER protocol. The second device performs integrity protection on the fourth message to prevent another unauthorized user from intercepting and modifying the fourth message.

Step 1407: The second device sends the first message to the first device.

The first message includes the UDP port number.

Step 1408: The first device stores the UDP port number corresponding to the identifier of the terminal and the identifier of the terminal.

After receiving the first message sent by the second device, the first device first parses the first message to obtain the UDP port number, and then the first device stores the UDP port number corresponding to the identifier of the terminal and the identifier of the terminal. The UDP port number is used to perform verification on or identify a Wireless Local Area Network Control Protocol application on the terminal.

Step 1409: The first device sends the fourth message to the terminal.

After receiving the first message sent by the second device, the first device first parses the first message to obtain the fourth message on which integrity protection is performed, and then sends the fourth message to the terminal. The fourth message may be an Extensible Authentication Protocol-success (EAP-success) message.

Step 14010: The terminal transmits the UDP port number to a message queue of an application manager of the terminal.

The terminal transmits the UDP port number to the message queue of the application manager of the terminal, so that the Wireless Local Area Network Control Protocol application calls the UDP port number from the message queue by using an API (Application Programming Interface, application programming interface) between the Wireless Local Area Network Control Protocol application and an operating system of the terminal. In this way, a malicious application on the terminal cannot use the private API between the Wireless Local Area Network Control Protocol application on the terminal and the operating system; therefore, the malicious application cannot call the UDP port number, and when the malicious application calls a UDP port used by the WLCP APP, to send a packet data network connection release request message to the first device to trigger WLCP, the first device determines that the packet data network connection release request message does not include the UDP port number, and therefore, the first device considers that the packet data network connection release request message is an unauthorized packet data network connection release request message, and discards the packet data network connection release request message. Therefore, a resource waste on a network side that is caused when WLCP is triggered by a malicious application on the terminal is effectively reduced, and an intention of maliciously breaking a PDN connection by the malicious application is effectively reduced.

The UDP port number is used to perform verification on or identify the Wireless Local Area Network Control Protocol application on the terminal. The second message includes the encrypted UDP port number. The second message is any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

Step 14011: The terminal sends a packet data network connection request message to the first device.

The packet data network connection request (PDN Connection Request) message includes the UDP port number and the identifier of the terminal. The packet data network connection request message is a packet data network connection establishment request message, a packet data network disconnection request message, or a packet data network connection release request message. The UDP port number is in a packet header of the packet data network connection request message, and the UDP port number is used as a source port number of the packet data network connection request message.

Step 14012: The first device verifies whether the UDP port number that is in the packet data network connection request message and corresponding to the identifier of the terminal is the same as a locally stored UDP port number corresponding to the identifier of the terminal.

The first device first locally obtains, according to the identifier of the terminal that is in the packet data network connection request message, an identifier that is of a terminal and is the same as the identifier of the terminal, then obtains, according to the locally obtained identifier of the terminal, a UDP port number corresponding to the identifier of the terminal, and verifies whether the UDP port number that is in the packet data network connection request message and corresponding to the identifier of the terminal is the same as the locally stored UDP port number corresponding to the identifier of the terminal, and if the UDP port number that is in the packet data network connection request message and corresponding to the identifier of the terminal is the same as the locally stored UDP port number corresponding to the identifier of the terminal, the first device considers that the packet data network connection request message is an authorized packet data network connection request message, and performs step 14013.

Step 14013: The first device sends a packet data network connection response message to the terminal.

The first device sends the packet data network connection response message to the terminal, so that the terminal receives the packet data network connection response message sent by the first device, to establish a connection to the second device by using the first device, and access a packet data network. The packet data network connection response message is a packet data network connection establishment response message, a packet data network disconnection response message, or a packet data network connection release response message.

According to the method for accessing a communications network by a terminal described in this embodiment of the present invention, first, a terminal generates a UDP port number corresponding to an identifier of the terminal, encrypts the UDP port number, generates a third message, performs integrity protection on the third message, and sends the third message to a first device, where the third message includes the encrypted UDP port number. The first device generates a first message according to the third message, and sends the first message to a second device. The second device decrypts the encrypted UDP port number, performs integrity protection on a fourth message, generates a first message, and sends the first message to the first device, where the first message includes the fourth message and the UDP port number. The first device stores the UDP port number corresponding to the identifier of the terminal and the identifier of the terminal, and the first device sends the fourth message to the terminal. The terminal transmits the UDP port number to a message queue of an application manager of the terminal, a Wireless Local Area Network Control Protocol application calls the UDP port number, and the terminal sends a packet data network connection request message to the first device. The first device verifies whether the UDP port number that is in the packet data network connection message and corresponding to the identifier of the terminal is the same as a locally stored UDP port number corresponding to the identifier of the terminal, and sends a packet data network connection response message to the terminal. In comparison with the prior art, a terminal sends, to a first device, a packet data network connection request message that carries a UDP port number, so that the first device can identify whether the packet data network connection request message is a message of a Wireless Local Area Network Control Protocol application or a packet data network connection message of a malicious application. This effectively reduces a resource waste on a network side that is caused when WLCP is triggered by a malicious application on the terminal.

It should be noted that alternatively, a terminal may generate a token corresponding to an identifier of the terminal, so that the terminal sends, to a first device, a packet data network connection request message that carries the token, and the first device can identify whether the packet data network connection request message is a message of a Wireless Local Area Network Control Protocol application or a packet data network connection request message of a malicious application, to reduce a resource waste on a network side that is caused when WLCP is triggered by a malicious application on the terminal. Specific steps are the steps described in the embodiments of the present invention. Details are not described herein. A difference lies in that a UDP port number described in the steps in the embodiments of the present invention may be changed into a token.

As shown in FIG. 21a, a method for accessing a communications network by a terminal described in an embodiment of the present invention includes the following steps:
Step 14014: A terminal generates a token corresponding to an identifier of the terminal.

Step 14015: The terminal encrypts the token, and performs integrity protection on a third message.

Step 14016: The terminal sends the third message to a first device.

Step 14017: The first device sends a first message to a second device.

Step 14018: The second device decrypts the encrypted token.

Step 14019: The second device performs integrity protection on a fourth message, and generates a first message.

Step 14020: The second device sends the first message to the first device.

Step 14021: The first device stores the token corresponding to the identifier of the terminal and the identifier of the terminal.

Step 14022: The first device sends the fourth message to the terminal.

Step 14023: The terminal transmits the token to a message queue of an application manager of the terminal.

Step 14024: The terminal sends a packet data network connection request message to the first device.

Step 14025: The first device verifies whether the token that is in the packet data network connection request message and corresponding to the identifier of the terminal is the same as a locally stored token corresponding to the identifier of the terminal.

Step 14026: The first device sends a packet data network connection response message to the terminal.

In this way, a terminal sends, to a first device, a packet data network connection request message that carries a token, so that the first device can identify whether the packet data network connection request message is a message of a Wireless Local Area Network Control Protocol application or a packet data network connection message of a malicious application. This effectively reduces a resource waste on a network side that is caused when WLCP is triggered by a malicious application on the terminal.

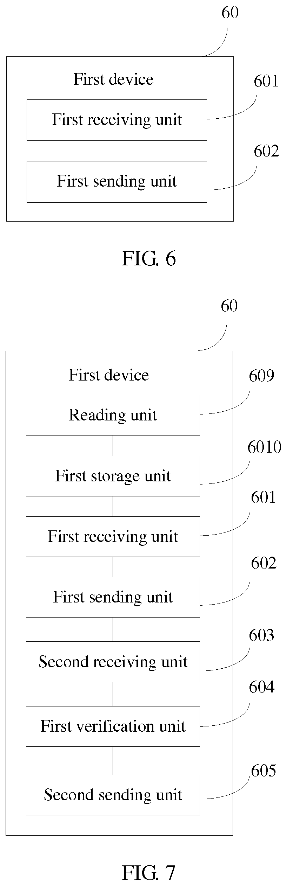

An embodiment of the present invention provides a first device 60, where the first device is a trusted wireless local area network access gateway TWAG, or the first device includes a TWAG and a trusted wireless local area network authentication, authorization, and accounting service proxy TWAP. As shown in FIG. 6, the first device 60 includes a first receiving unit 601 and a first sending unit 602.

The first receiving unit 601 is configured to receive a first message sent by a second device, where the first message includes a second message and a token, and the second message includes the encrypted token; or the first receiving unit 601 is configured to receive a first message sent by a second device, where the first message includes the second message, and the second message includes the encrypted token.

It should be noted that a message is exchanged between the second device and the first device by using the DIAMETER protocol, and the first message is a message borne in the DIAMETER protocol. The first message may be either of a DIAMETER-Extensible Authentication Protocol-answer-command message (DIAMETER-EAP-Answer-Command) and an authentication, authorization, and accounting message (AAA), the DIAMETER-Extensible Authentication Protocol-answer-command message bears an Extensible Authentication Protocol payload (EAP-payload), the Extensible Authentication Protocol payload (EAP-payload) may be any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ), and the authentication, authorization, and accounting message includes any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

The first sending unit 602 is configured to send the second message to the terminal.

After receiving the first message sent by the second device, the first device first parses the first message to obtain the second message, and then sends the second message to the terminal.

The first message includes the second message, and the second message includes the encrypted token. The second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ; or particularly, the second message may be another Extensible Authentication Protocol payload (EAP-payload) message.

In this way, first, a first message sent by a second device is received, where the first message includes a second message and a token, and the second message includes the encrypted token; or a first message sent by a second device is received, where the first message includes the second message, and the second message includes the encrypted token; and then the second message is sent to the terminal. This effectively reduces a resource waste on a network side that is caused when WLCP is triggered by a malicious application on the terminal.

Based on FIG. 6, as shown in FIG. 7, the first device 60 further includes:
a second receiving unit 603, configured to receive a packet data network connection request message sent by the terminal, where the packet data network connection request message includes the token, and the packet data network connection request message is a packet data network connection establishment request message, a packet data network disconnection request message, or a packet data network connection release request message;
a first verification unit 604, configured to verify whether the token that is in the packet data network connection request message and corresponding to an identifier of the terminal is the same as a locally stored token corresponding to the identifier of the terminal;
a second sending unit 605, configured to: if the token that is in the packet data network connection request message and corresponding to the identifier of the terminal is the same as the locally stored token corresponding to the identifier of the terminal, send a packet data network connection response message to the terminal, where the packet data network connection response message is a packet data network connection establishment response message, a packet data network disconnection response message, or a packet data network connection release response message;
a reading unit 609, configured to read the token corresponding to the identifier of the terminal and the identifier of the terminal from the first message; and
a first storage unit 6010, configured to store the token corresponding to the identifier of the terminal and the identifier of the terminal.

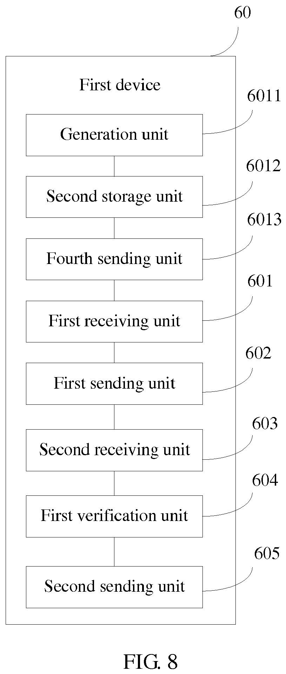

Based on FIG. 6, as shown in FIG. 8, the first device 60 further includes a second receiving unit 603, a first verification unit 604, a second sending unit 605, a generation unit 6011, a second storage unit 6012, and a fourth sending unit 6013.

The second receiving unit 603 is configured to receive a packet data network connection request message sent by the terminal, where the packet data network connection request message includes the token, and the packet data network connection request message is a packet data network connection establishment request message, a packet data network disconnection request message, or a packet data network connection release request message.

The first verification unit 604 is configured to verify whether the token that is in the packet data network connection request message and corresponding to an identifier of the terminal is the same as a locally stored token corresponding to the identifier of the terminal.

The second sending unit 605 is configured to: if the token that is in the packet data network connection request message and corresponding to the identifier of the terminal is the same as the locally stored token corresponding to the identifier of the terminal, send a packet data network connection response message to the terminal, where the packet data network connection response message is a packet data network connection establishment response message, a packet data network disconnection response message, or a packet data network connection release response message.

The generation unit 6011 is configured to generate the token corresponding to the identifier of the terminal.

First, the terminal performs normal network attachment, and an EAP (Extensible Authentication Protocol, Extensible Authentication Protocol) message is exchanged between the terminal and the second device, so that the first device can obtain the identifier of the terminal from the second device. Then, the first device may generate the token (Token) corresponding to the identifier of the terminal.

Particularly, each time the terminal needs to access a communications network, the first device may obtain the identifier of the terminal from the second device, and re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI (International Mobile Subscriber Identification Number, international mobile subscriber identity), a MAC (Media Access Control, Media Access Control layer) address, or an IP (Internet Protocol, Internet Protocol) address. The token may be generated by means of definition by an operator, and uniqueness of the generated token needs to be ensured. A specific manner of generating a token belongs to the prior art, and details are not described herein in this embodiment of the present invention.

The second storage unit 6012 is configured to store the token corresponding to the identifier of the terminal and the identifier of the terminal.

The fourth sending unit 6013 is configured to send the token to the second device.

A DIAMETER-Extensible Authentication Protocol-request-command message DIAMETER-EAP-REQ-Command or an authentication, authorization, and accounting message AAA may be sent to the second device. The authentication, authorization, and accounting message includes an Extensible Authentication Protocol-response message EAP-RSP or an Extensible Authentication Protocol-identity message EAP-Identity, the DIAMETER-Extensible Authentication Protocol-request-command message includes the token, the Extensible Authentication Protocol-response message includes the token, and the Extensible Authentication Protocol-identity message includes the token.

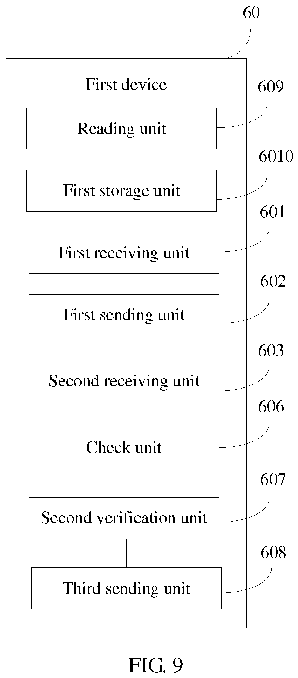

Based on FIG. 6, as shown in FIG. 9, the first device 60 further includes a second receiving unit 603, a check unit 606, a second verification unit 607, a third sending unit 608, a reading unit 609, and a first storage unit 6010.

The second receiving unit 603 is configured to receive a packet data network connection request message sent by the terminal, where the packet data network connection request message includes the token, and the packet data network connection request message is a packet data network connection establishment request message, a packet data network disconnection request message, or a packet data network connection release request message.

The check unit 606 is configured to check whether the packet data network connection request message includes the token.

If the packet data network connection request message does not include the token, the first device considers that the packet data network connection request message is an unauthorized packet data network connection request message, and the first device discards or does not process the packet data network connection request message.

The second verification unit 607 is configured to: if the packet data network connection request message includes the token, verify whether the token that is in the packet data network connection request message and corresponding to an identifier of the terminal is the same as a locally stored token corresponding to the identifier of the terminal.

The first device first locally obtains, according to the identifier of the terminal that is in the packet data network connection request message, an identifier that is of a terminal and is the same as the identifier of the terminal, then obtains, according to the locally obtained identifier of the terminal, a token corresponding to the identifier of the terminal, and verifies whether the token that is in the packet data network connection request message and corresponding to the identifier of the terminal is the same as the locally stored token corresponding to the identifier of the terminal, and if the token that is in the packet data network connection request message and corresponding to the identifier of the terminal is the same as the locally stored token corresponding to the identifier of the terminal, the first device considers that the packet data network connection request message is an authorized packet data network connection request message.

The third sending unit 608 is configured to: if the token that is in the packet data network connection request message and corresponding to the identifier of the terminal is the same as the locally stored token corresponding to the identifier of the terminal, send a packet data network connection response message to the terminal, where the packet data network connection response message is a packet data network connection establishment response message, a packet data network disconnection response message, or a packet data network connection release response message.

The reading unit 609 is configured to read the token corresponding to the identifier of the terminal and the identifier of the terminal from the first message.

The first storage unit 6010 is configured to store the token corresponding to the identifier of the terminal and the identifier of the terminal.

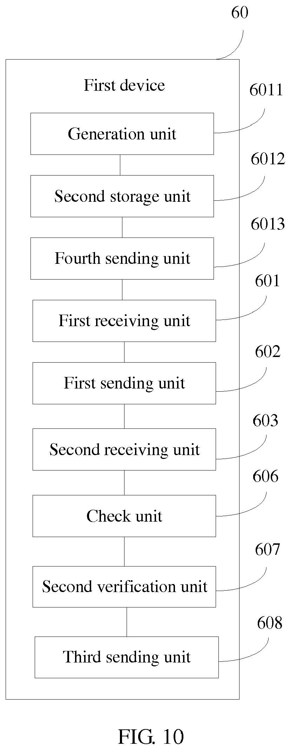

Based on FIG. 6, as shown in FIG. 10, the first device 60 further includes a second receiving unit 603, a check unit 606, a second verification unit 607, a third sending unit 608, a generation unit 6011, a second storage unit 6012, and a fourth sending unit 6013.

The second receiving unit 603 is configured to receive a packet data network connection request message sent by the terminal, where the packet data network connection request message includes the token and an identifier of the terminal, and the packet data network connection request message is a packet data network connection establishment request message, a packet data network disconnection request message, or a packet data network connection release request message.

The check unit 606 is configured to check whether the packet data network connection request message includes the token.

If the packet data network connection request message does not include the token, the first device considers that the packet data network connection request message is an unauthorized packet data network connection request message, and the first device discards or does not process the packet data network connection request message.

The second verification unit 607 is configured to: if the packet data network connection request message includes the token, verify whether the token that is in the packet data network connection request message and corresponding to the identifier of the terminal is the same as a locally stored token corresponding to the identifier of the terminal.

The first device first locally obtains, according to the identifier of the terminal that is in the packet data network connection request message, an identifier that is of a terminal and is the same as the identifier of the terminal, then obtains, according to the locally obtained identifier of the terminal, a token corresponding to the identifier of the terminal, and verifies whether the token that is in the packet data network connection request message and corresponding to the identifier of the terminal is the same as the locally stored token corresponding to the identifier of the terminal, and if the token that is in the packet data network connection request message and corresponding to the identifier of the terminal is the same as the locally stored token corresponding to the identifier of the terminal, the first device considers that the packet data network connection request message is an authorized packet data network connection request message.

The third sending unit 608 is configured to: if the token that is in the packet data network connection request message and corresponding to the identifier of the terminal is the same as the locally stored token corresponding to the identifier of the terminal, send a packet data network connection response message to the terminal, where the packet data network connection response message is a packet data network connection establishment response message, a packet data network disconnection response message, or a packet data network connection release response message.

The generation unit 6011 is configured to generate the token corresponding to the identifier of the terminal.

First, the terminal performs normal network attachment, and an EAP (Extensible Authentication Protocol, Extensible Authentication Protocol) message is exchanged between the terminal and the second device, so that the first device can obtain the identifier of the terminal from the second device. Then, the first device may generate the token (Token) corresponding to the identifier of the terminal.

Particularly, each time the terminal needs to access a communications network, the first device may obtain the identifier of the terminal from the second device, and re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI (International Mobile Subscriber Identification Number, international mobile subscriber identity), a MAC (Media Access Control, Media Access Control layer) address, or an IP (Internet Protocol, Internet Protocol) address. The token may be generated by means of definition by an operator, and uniqueness of the generated token needs to be ensured. A specific manner of generating a token belongs to the prior art, and details are not described herein in this embodiment of the present invention.

The second storage unit 6012 is configured to store the token corresponding to the identifier of the terminal and the identifier of the terminal.

The fourth sending unit 6013 is configured to send the token to the second device.

A DIAMETER-Extensible Authentication Protocol-request-command message DIAMETER-EAP-REQ-Command or an authentication, authorization, and accounting message AAA may be sent to the second device. The authentication, authorization, and accounting message includes an Extensible Authentication Protocol-response message EAP-RSP or an Extensible Authentication Protocol-identity message EAP-Identity, the DIAMETER-Extensible Authentication Protocol-request-command message includes the token, the Extensible Authentication Protocol-response message includes the token, and the Extensible Authentication Protocol-identity message includes the token.

It should be noted that the token is used to perform verification on or identify an authorized Wireless Local Area Network Control Protocol application.

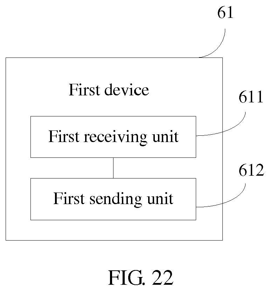

An embodiment of the present invention provides a first device 61, where the first device is a trusted wireless local area network access gateway TWAG, or the first device includes a TWAG and a trusted wireless local area network authentication, authorization, and accounting service proxy TWAP. As shown in FIG. 22, the first device 61 includes:
a first receiving unit 611, configured to receive a first message sent by a second device, where the first message includes a second message and a User Datagram Protocol UDP port number, and the second message includes the encrypted UDP port number; or the first receiving unit 611, further configured to receive a first message sent by a second device, where the first message includes the second message, and the second message includes the encrypted UDP port number; and
a first sending unit 612, configured to send the second message to the terminal.

In this way, a first device receives a first message sent by a second device, where the first message includes a second message and a User Datagram Protocol UDP port number, and the second message includes the encrypted UDP port number, or the first message includes a second message; and then sends the second message to a terminal, so that a WLCP application on the terminal obtains the UDP port number. This effectively reduces a resource waste on a network side that is caused when WLCP is triggered by a malicious application on the terminal.

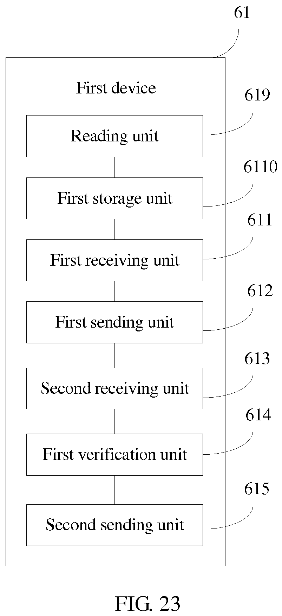

Based on FIG. 22, as shown in FIG. 23, the first device 61 further includes:
a second receiving unit 613, configured to receive a packet data network connection request message sent by the terminal, where the packet data network connection request message includes the UDP port number, and the packet data network connection request message is a packet data network connection establishment request message, a packet data network disconnection request message, or a packet data network connection release request message;
a first verification unit 614, configured to verify whether the UDP port number that is in the packet data network connection request message and corresponding to an identifier of the terminal is the same as a locally stored UDP port number corresponding to the identifier of the terminal;
a second sending unit 615, configured to: if the UDP port number that is in the packet data network connection request message and corresponding to the identifier of the terminal is the same as the locally stored UDP port number corresponding to the identifier of the terminal, send a packet data network connection response message to the terminal, where the packet data network connection response message is a packet data network connection establishment response message, a packet data network disconnection response message, or a packet data network connection release response message;
a reading unit 619, configured to read the UDP port number corresponding to the identifier of the terminal and the identifier of the terminal from the first message; and
a first storage unit 6110, configured to store the UDP port number corresponding to the identifier of the terminal and the identifier of the terminal.

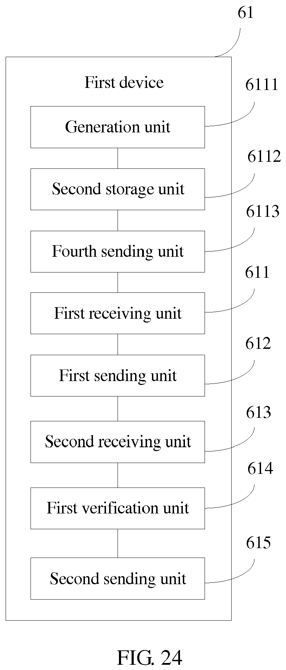

Based on FIG. 22, as shown in FIG. 24, the first device 61 further includes:
a second receiving unit 613, configured to receive a packet data network connection request message sent by the terminal, where the packet data network connection request message includes the UDP port number, and the packet data network connection request message is a packet data network connection establishment request message, a packet data network disconnection request message, or a packet data network connection release request message;
a first verification unit 614, configured to verify whether the UDP port number that is in the packet data network connection request message and corresponding to an identifier of the terminal is the same as a locally stored UDP port number corresponding to the identifier of the terminal;
a second sending unit 615, configured to: if the UDP port number that is in the packet data network connection request message and corresponding to the identifier of the terminal is the same as the locally stored UDP port number corresponding to the identifier of the terminal, send a packet data network connection response message to the terminal, where the packet data network connection response message is a packet data network connection establishment response message, a packet data network disconnection response message, or a packet data network connection release response message;
a generation unit 6111, configured to generate the UDP port number corresponding to the identifier of the terminal;
a second storage unit 6112, configured to store the UDP port number corresponding to the identifier of the terminal and the identifier of the terminal; and
a fourth sending unit 6113, configured to send the UDP port number to the second device.

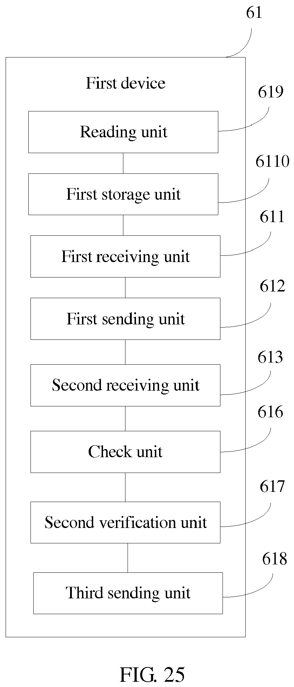

Based on FIG. 22, as shown in FIG. 25, the first device 61 further includes:
a second receiving unit 613, configured to receive a packet data network connection request message sent by the terminal, where the packet data network connection request message includes the UDP port number, and the packet data network connection request message is a packet data network connection establishment request message, a packet data network disconnection request message, or a packet data network connection release request message;
a check unit 616, configured to check whether the packet data network connection request message includes the UDP port number;
a second verification unit 617, configured to: if the packet data network connection request message includes the UDP port number, verify whether the UDP port number that is in the packet data network connection request message and corresponding to an identifier of the terminal is the same as a locally stored UDP port number corresponding to the identifier of the terminal;
a third sending unit 618, configured to: if the UDP port number that is in the packet data network connection request message and corresponding to the identifier of the terminal is the same as the locally stored UDP port number corresponding to the identifier of the terminal, send a packet data network connection response message to the terminal, where the packet data network connection response message is a packet data network connection establishment response message, a packet data network disconnection response message, or a packet data network connection release response message;
a reading unit 619, configured to read the UDP port number corresponding to the identifier of the terminal and the identifier of the terminal from the first message; and
a first storage unit 6110, configured to store the UDP port number corresponding to the identifier of the terminal and the identifier of the terminal.

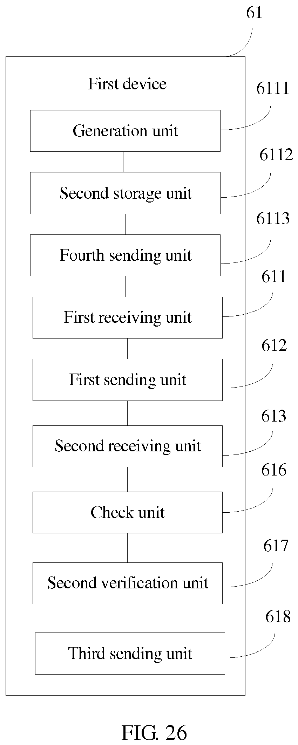

Based on FIG. 22, as shown in FIG. 26, the first device 61 further includes:
a second receiving unit 613, configured to receive a packet data network connection request message sent by the terminal, where the packet data network connection request message includes the UDP port number and an identifier of the terminal, and the packet data network connection request message is a packet data network connection establishment request message, a packet data network disconnection request message, or a packet data network connection release request message;
a check unit 616, configured to check whether the packet data network connection request message includes the UDP port number;
a second verification unit 617, configured to: if the packet data network connection request message includes the UDP port number, verify whether the UDP port number that is in the packet data network connection request message and corresponding to the identifier of the terminal is the same as a locally stored UDP port number corresponding to the identifier of the terminal;
a third sending unit 618, configured to: if the UDP port number that is in the packet data network connection request message and corresponding to the identifier of the terminal is the same as the locally stored UDP port number corresponding to the identifier of the terminal, send a packet data network connection response message to the terminal, where the packet data network connection response message is a packet data network connection establishment response message, a packet data network disconnection response message, or a packet data network connection release response message;
a generation unit 6111, configured to generate the UDP port number corresponding to the identifier of the terminal;
a second storage unit 6112, configured to store the UDP port number corresponding to the identifier of the terminal and the identifier of the terminal; and
a fourth sending unit 6113, configured to send the UDP port number to the second device.

It should be noted that the UDP port number is used to perform verification on or identify an authorized Wireless Local Area Network Control Protocol application.

Detailed execution content of all units in the first device is described in the embodiments of the present invention. Details are not described herein. A difference lies in that a token described in the embodiments of the present invention may be changed into a UDP port number.

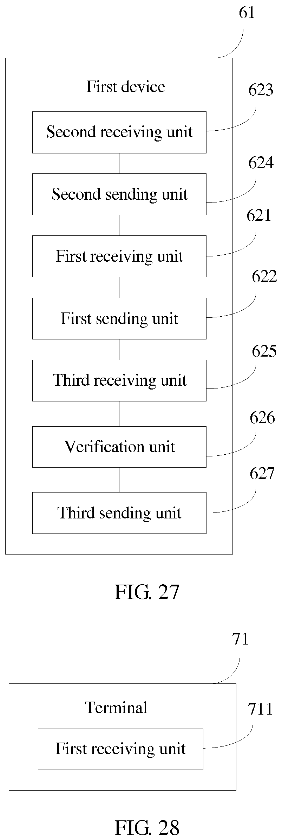

An embodiment of the present invention provides a first device 62, where the first device is a trusted wireless local area network access gateway TWAG, or the first device includes a TWAG and a trusted wireless local area network authentication, authorization, and accounting service proxy TWAP. As shown in FIG. 27, the first device 62 includes:
a first receiving unit 621, configured to receive a first message sent by a second device, where the first message includes a second message and an authentication parameter;
a first sending unit 622, configured to send the second message to the terminal;
a second receiving unit 623, configured to receive a third message sent by the terminal, where the third message includes the encrypted authentication parameter;
a second sending unit 624, configured to send the first message to the second device, where the first message includes the third message;
a third receiving unit 625, configured to receive a packet data network connection request message sent by the terminal, where the packet data network connection request message includes the authentication parameter, and the packet data network connection request message is a packet data network connection establishment request message, a packet data network disconnection request message, or a packet data network connection release request message;
a verification unit 626, configured to verify whether the authentication parameter that is in the packet data network connection request message and corresponding to an identifier of the terminal is the same as a locally stored authentication parameter corresponding to the identifier of the terminal; and
a third sending unit 627, configured to: if the authentication parameter that is in the packet data network connection request message and corresponding to the identifier of the terminal is the same as the locally stored authentication parameter corresponding to the identifier of the terminal, send a packet data network connection response message to the terminal, where the packet data network connection response message is a packet data network connection establishment response message, a packet data network disconnection response message, or a packet data network connection release response message.

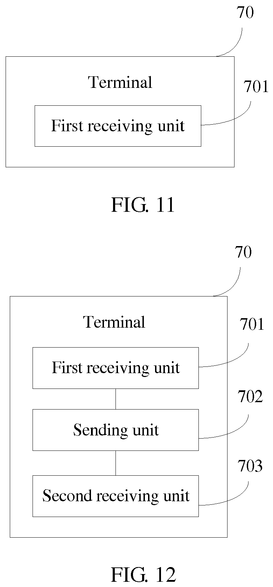

An embodiment of the present invention provides a terminal 70. As shown in FIG. 11, the terminal 70 includes:
a first receiving unit 701, configured to receive a second message sent by a first device, where the second message includes the encrypted token.

After receiving the second message sent by the first device, the terminal first parses the second message to obtain the encrypted token, where the second message includes the encrypted token; decrypts the token to obtain the token; and then transmits the token to a message queue of an application manager of the terminal, so that the Wireless Local Area Network Control Protocol application calls the token from the message queue by using an API (Application Programming Interface, application programming interface) between the Wireless Local Area Network Control Protocol application and an operating system of the terminal. In this way, a malicious application on the terminal cannot use the private API between the Wireless Local Area Network Control Protocol application on the terminal and the operating system; therefore, the malicious application cannot call the token, and when the malicious application calls a UDP port used by the WLCP APP, to send a packet data network connection release request message to the first device to trigger WLCP, the first device determines that the packet data network connection release request message does not include the token, and therefore, the first device considers that the packet data network connection release request message is an unauthorized packet data network connection release request message, and discards the packet data network connection release request message. Therefore, a resource waste on a network side that is caused when WLCP is triggered by a malicious application on the terminal is effectively reduced, and an intention of maliciously breaking a PDN connection by the malicious application is effectively reduced.

The second message includes the encrypted token. The second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ; or particularly, the second message may be another Extensible Authentication Protocol payload (EAP-payload) message.

In this way, a second message sent by a first device is received, and the second message includes the encrypted token. This effectively reduces a resource waste on a network side that is caused when WLCP is triggered by a malicious application on a terminal.

As shown in FIG. 12, the terminal 70 further includes:
a sending unit 702, configured to send a packet data network connection request message to the first device, where the packet data network connection request message includes the token, and the packet data network connection request message is a packet data network connection establishment request message, a packet data network disconnection request message, or a packet data network connection release request message; and
a second receiving unit 703, configured to receive a packet data network connection response message sent by the first device, where the packet data network connection response message is a packet data network connection establishment response message, a packet data network disconnection response message, or a packet data network connection release response message.

It should be noted that the token is used to perform verification on or identify an authorized Wireless Local Area Network Control Protocol application.

An embodiment of the present invention provides a terminal 71. As shown in FIG. 28, the terminal 71 includes:
a receiving unit 711, configured to receive a second message sent by a first device, where the second message includes an encrypted User Datagram Protocol UDP port number.

In this way, a terminal may obtain a UDP port number from a received second message sent by a first device, so that a WLCP application on the terminal obtains the UDP port number or a token. This effectively reduces a resource waste on a network side that is caused when WLCP is triggered by a malicious application on the terminal.

Detailed execution content of all units in the terminal is described in the embodiments of the present invention. Details are not described herein. A difference lies in that a token described in the embodiments of the present invention may be changed into a UDP port number.

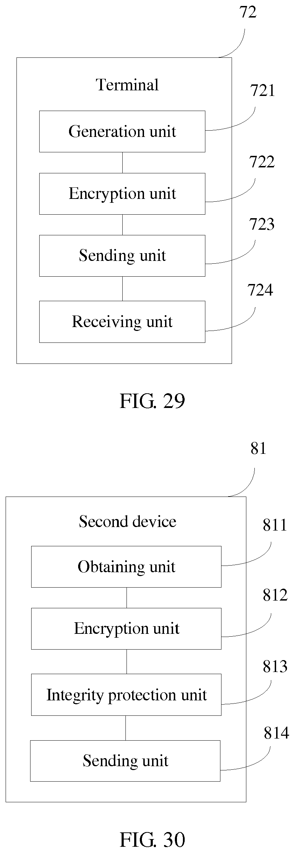

An embodiment of the present invention provides a terminal 72. As shown in FIG. 29, the terminal 72 includes:
a generation unit 721, configured to generate an authentication parameter corresponding to an identifier of the terminal, where the authentication parameter is a token or a User Datagram Protocol UDP port number;
an encryption unit 722, configured to encrypt the authentication parameter;
a sending unit 723, configured to send a third message to the first device, where the third message includes the encrypted authentication parameter; where
the sending unit 723 is further configured to send a packet data network connection request message to the first device, where the packet data network connection request message includes the authentication parameter, and the packet data network connection request message is a packet data network connection establishment request message, a packet data network disconnection request message, or a packet data network connection release request message; and
a receiving unit 724, configured to receive a packet data network connection response message sent by the first device, where the packet data network connection response message is a packet data network connection establishment response message, a packet data network disconnection response message, or a packet data network connection release response message.

The third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

In this way, a terminal generates an authentication parameter, and the terminal sends, to a first device, a packet data network connection request message that carries the authentication parameter, so that the first device can identify whether the packet data network connection request message is a message of a Wireless Local Area Network Control Protocol application or a packet data network connection request message of a malicious application. This effectively reduces a resource waste on a network side that is caused when WLCP is triggered by a malicious application on the terminal.

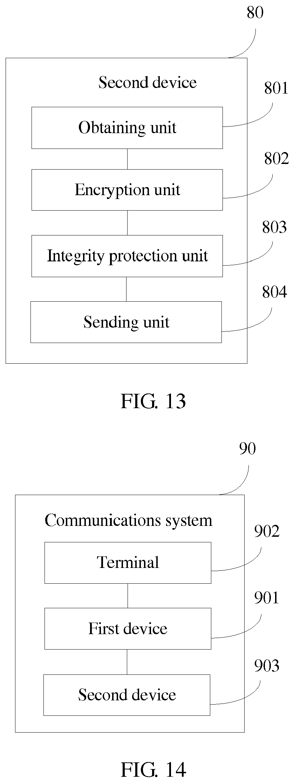

An embodiment of the present invention provides a second device 80. As shown in FIG. 13, the second device is an authentication, authorization, and accounting server AAA or a home subscriber server HSS, and the second device includes an obtaining unit 801, an encryption unit 802, an integrity protection unit 803, and a sending unit 804.

The obtaining unit 801 is configured to obtain a token.

The encryption unit 802 is configured to encrypt the token.

The second device may generate a key and encrypt the token to prevent another unauthorized user from intercepting and seeing the token, and the key may be a TEK (Transient EAP Keys, transient EAP key). It should be noted that the second device may encrypt the token in a CBC (Cipher Block Chaining, cipher block chaining) mode by using the AES (advanced Encryption standard, Advanced Encryption Standard) and a 128-bit key.

The integrity protection unit 803 is configured to perform integrity protection on a first message, where the first message includes a second message and the token, and the second message includes the encrypted token; or the integrity protection unit 803 is further configured to perform integrity protection on a first message, where the first message includes the second message, and the second message includes the encrypted token.

After encrypting the token, the second device generates the second message, where the second message includes the encrypted token; encapsulates the second message to generate the first message; and performs integrity protection on the first message to prevent another unauthorized user from intercepting and modifying the first message, where the first message includes the second message.

It should be noted that the second device may generate message authentication code according to a MAC (message authentication code, message authentication code) algorithm HMAC-SHA1-128, an authentication key, and the first message. The second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ; or particularly, the second message may be another Extensible Authentication Protocol payload (EAP-payload) message.

The sending unit 804 is configured to send the first message to a first device, so that the first device obtains the second message from the first message.

It should be noted that a message is exchanged between the second device and the first device by using the DIAMETER protocol, and the first message is a message borne in the DIAMETER protocol. The first message may be either of a DIAMETER-Extensible Authentication Protocol-answer-command message (DIAMETER-EAP-Answer-Command) and an authentication, authorization, and accounting message (AAA), the DIAMETER-Extensible Authentication Protocol-answer-command message bears an Extensible Authentication Protocol payload (EAP-payload), the Extensible Authentication Protocol payload (EAP-payload) may be any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ), and the authentication, authorization, and accounting message includes any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

In this way, a token is first obtained; then the token is encrypted; integrity protection is performed on a first message, where the first message includes a second message and the token, and the second message includes the encrypted token; or integrity protection is performed on a first message, where the first message includes the second message, and the second message includes the encrypted token; and then the first message is sent to a first device, so that the first device obtains the second message from the first message. This effectively reduces a resource waste on a network side that is caused when WLCP is triggered by a malicious application on a terminal.

The obtaining unit 801 is specifically configured to:
generate the token corresponding to an identifier of the terminal.

First, the terminal performs normal network attachment, and an EAP (Extensible Authentication Protocol, Extensible Authentication Protocol) message is exchanged between the terminal and the second device, so that the second device obtains the identifier of the terminal. Then the second device may generate the token (Token) corresponding to the identifier of the terminal, and the token is used to perform verification on or identify a Wireless Local Area Network Control Protocol application (WLCP APP) on the terminal.

Particularly, each time the terminal needs to access a communications network, the second device may obtain the identifier of the terminal, and may re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI (International Mobile Subscriber Identification Number, international mobile subscriber identity), a MAC (Media Access Control, Media Access Control layer) address, or an IP (Internet Protocol, Internet Protocol) address. The token may be generated by means of definition by an operator, and uniqueness of the generated token needs to be ensured. A specific manner of generating a token belongs to the prior art, and details are not described herein in this embodiment of the present invention.

The obtaining unit 801 is specifically configured to:
receive the token sent by the first device.

The token may be obtained from a received DIAMETER-Extensible Authentication Protocol-request-command message DIAMETER-EAP-REQ-Command or a received authentication, authorization, and accounting message AAA sent by the first device. The authentication, authorization, and accounting message includes an Extensible Authentication Protocol-response message EAP-RSP or an Extensible Authentication Protocol-identity message EAP-Identity, the DIAMETER-Extensible Authentication Protocol-request-command message includes the token, the Extensible Authentication Protocol-response message includes the token, and the Extensible Authentication Protocol-identity message includes the token.

An embodiment of the present invention provides a second device 81. As shown in FIG. 30, the second device is an authentication, authorization, and accounting server AAA or a home subscriber server HSS, and the second device includes:
an obtaining unit 811, configured to obtain a User Datagram Protocol UDP port number;
an encryption unit 812, configured to encrypt the UDP port number;
an integrity protection unit 813, configured to perform integrity protection on a first message, where the first message includes a second message and the UDP port number, and the second message includes the encrypted UDP port number; or the integrity protection unit 813, further configured to perform integrity protection on a first message, where the first message includes the second message, and the second message includes the encrypted UDP port number; and
a sending unit 814, configured to send the first message to a first device, so that the first device obtains the second message or the UDP port number from the first message.

In this way, a second device obtains a UDP port umber, encrypts the UDP port number, and sends the first message to a first device, so that the first device obtains the second message or the UDP port number from the first message, and sends the second message or the UDP port number to a terminal, and a WLCP application on the terminal obtains the UDP port number. This effectively reduces a resource waste on a network side that is caused when WLCP is triggered by a malicious application on the terminal.

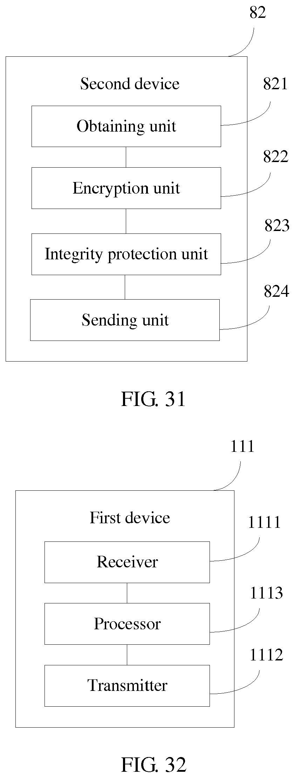

An embodiment of the present invention provides a second device 82. As shown in FIG. 31, the second device is an authentication, authorization, and accounting server AAA or a home subscriber server HSS, and the second device includes:
an obtaining unit 821, configured to obtain an authentication parameter, where the authentication parameter is a token or a User Datagram Protocol UDP port number;
an encryption unit 822, configured to encrypt the authentication parameter;
an integrity protection unit 823, configured to: perform integrity protection on a second message, and generate a first message, where the first message includes the second message and the authentication parameter, and the second message includes the encrypted authentication parameter; or the integrity protection unit 823, further configured to: perform integrity protection on a second message, and generate a first message, where the first message includes the second message, and the second message includes the encrypted authentication parameter; and
a sending unit 824, configured to send the first message to a first device, so that the first device obtains the second message or the authentication parameter from the first message.

The obtaining unit 821 is specifically configured to:
generate the authentication parameter corresponding to an identifier of the terminal; or receive the authentication parameter sent by the first device; or receive the first message sent by the first device, and perform a decryption operation on the encrypted authentication parameter, where the first message includes a third message, and the third message includes the encrypted authentication parameter.

It should be noted that the token or the UDP port number is used to perform verification on or identify an authorized Wireless Local Area Network Control Protocol application. The third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP. Detailed execution content of all units in the second device is described in the embodiments of the present invention. Details are not described herein. A difference lies in that a token described in the embodiments of the present invention may be changed into a UDP port number.

An embodiment of the present invention provides a communications system 90. As shown in FIG. 14, the communications system 90 includes:
a first device 901, a terminal 902, and a second device 903. The second device 903 is configured to: obtain a token;
encrypt the token;
perform integrity protection on a first message, where the first message includes a second message and the token, and the second message includes the encrypted token; or perform integrity protection on a first message, where the first message includes the second message, and the second message includes the encrypted token; and
send the first message to the first device, so that the first device obtains the second message from the first message.

The first device 901 is configured to: receive the first message sent by the second device, where the first message includes the second message and the token, and the second message includes the encrypted token; or receive the first message sent by the second device, where the first message includes the second message, and the second message includes the encrypted token; and
send the second message to the terminal.

The terminal 903 is configured to receive the second message sent by the first device, where the second message includes the encrypted token.

All of the first device 901, the terminal 902, and the second device 903 may further generate a UDP port number and a token corresponding to an identifier of the terminal.

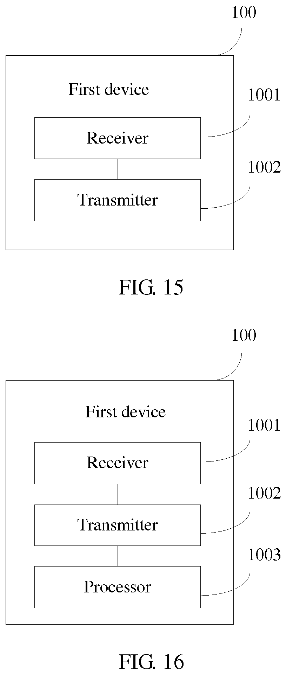

An embodiment of the present invention provides a first device 100. As shown in FIG. 15, the first device is a trusted wireless local area network access gateway TWAG, and the first device includes a receiver 1001 and a transmitter 1002.

The receiver 1001 is configured to receive a first message sent by a second device, where the first message includes a second message and a token, and the second message includes the encrypted token; or the receiver 1001 is further configured to receive a first message sent by a second device, where the first message includes the second message, and the second message includes the encrypted token.

It should be noted that a message is exchanged between the second device and the first device by using the DIAMETER protocol, and the first message is a message borne in the DIAMETER protocol. The first message may be either of a DIAMETER-Extensible Authentication Protocol-answer-command message (DIAMETER-EAP-Answer-Command) and an authentication, authorization, and accounting message (AAA), the DIAMETER-Extensible Authentication Protocol-answer-command message bears an Extensible Authentication Protocol payload (EAP-payload), the Extensible Authentication Protocol payload (EAP-payload) may be any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ), and the authentication, authorization, and accounting message includes any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

The transmitter 1002 is configured to send the second message to the terminal.

After receiving the first message sent by the second device, the first device first parses the first message to obtain the second message, and then sends the second message to the terminal.

The first message includes the second message, and the second message includes the encrypted token. The second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ; or particularly, the second message may be another Extensible Authentication Protocol payload (EAP-payload) message.

In this way, first, a first message sent by a second device is received, where the first message includes a second message and a token, and the second message includes the encrypted token; or a first message sent by a second device is received, where the first message includes the second message, and the second message includes the encrypted token; and then the second message is sent to the terminal. This effectively reduces a resource waste on a network side that is caused when WLCP is triggered by a malicious application on the terminal.

The receiver 1001 is further configured to:
receive a packet data network connection request message sent by the terminal, where the packet data network connection request message includes the token, and the packet data network connection request message is a packet data network connection establishment request message, a packet data network disconnection request message, or a packet data network connection release request message.

As shown in FIG. 16, the first device 100 further includes:
a processor 1003, configured to verify whether the token that is in the packet data network connection request message and corresponding to an identifier of the terminal is the same as a locally stored token corresponding to the identifier of the terminal.

The transmitter 1002 is further configured to:
if the token that is in the packet data network connection request message and corresponding to the identifier of the terminal is the same as the locally stored token corresponding to the identifier of the terminal, send a packet data network connection response message to the terminal, where the packet data network connection response message is a packet data network connection establishment response message, a packet data network disconnection response message, or a packet data network connection release response message.

The processor 1003 is further configured to:
check whether the packet data network connection request message includes the token.

If the packet data network connection request message does not include the token, the first device considers that the packet data network connection request message is an unauthorized packet data network connection request message, and the first device discards or does not process the packet data network connection request message.

The processor 1003 is further configured to:
if the packet data network connection request message includes the token, verify whether the token that is in the packet data network connection request message and corresponding to an identifier of the terminal is the same as a locally stored token corresponding to the identifier of the terminal.

The first device first locally obtains, according to the identifier of the terminal that is in the packet data network connection request message, an identifier that is of a terminal and is the same as the identifier of the terminal, then obtains, according to the locally obtained identifier of the terminal, a token corresponding to the identifier of the terminal, and verifies whether the token that is in the packet data network connection request message and corresponding to the identifier of the terminal is the same as the locally stored token corresponding to the identifier of the terminal, and if the token that is in the packet data network connection request message and corresponding to the identifier of the terminal is the same as the locally stored token corresponding to the identifier of the terminal, the first device considers that the packet data network connection request message is an authorized packet data network connection request message.

The transmitter 1002 is further configured to:
if the token that is in the packet data network connection request message and corresponding to the identifier of the terminal is the same as the locally stored token corresponding to the identifier of the terminal, send a packet data network connection response message to the terminal, where the packet data network connection response message is a packet data network connection establishment response message, a packet data network disconnection response message, or a packet data network connection release response message.

The processor 1003 is further configured to read the token corresponding to the identifier of the terminal and the identifier of the terminal from the first message.

The processor 1003 is further configured to store the token corresponding to the identifier of the terminal and the identifier of the terminal.

The processor 1003 is further configured to generate the token corresponding to the identifier of the terminal.

First, the terminal performs normal network attachment, and an EAP (Extensible Authentication Protocol, Extensible Authentication Protocol) message is exchanged between the terminal and the second device, so that the first device can obtain the identifier of the terminal from the second device. Then the first device may generate the token (Token) corresponding to the identifier of the terminal, and the token is used to perform verification on or identify a Wireless Local Area Network Control Protocol application (WLCP APP) on the terminal.

Particularly, each time the terminal needs to access a communications network, the first device may obtain the identifier of the terminal from the second device, and re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI (International Mobile Subscriber Identification Number, international mobile subscriber identity), a MAC (Media Access Control, Media Access Control layer) address, or an IP (Internet Protocol, Internet Protocol) address. The token may be generated by means of definition by an operator, and uniqueness of the generated token needs to be ensured. A specific manner of generating a token belongs to the prior art, and details are not described herein in this embodiment of the present invention.

The processor 1003 is further configured to store the token corresponding to the identifier of the terminal and the identifier of the terminal.

The transmitter 1002 is further configured to send the token to the second device.

A DIAMETER-Extensible Authentication Protocol-request-command message DIAMETER-EAP-REQ-Command or an authentication, authorization, and accounting message AAA may be sent to the second device. The authentication, authorization, and accounting message includes an Extensible Authentication Protocol-response message EAP-RSP or an Extensible Authentication Protocol-identity message EAP-Identity, the DIAMETER-Extensible Authentication Protocol-request-command message includes the token, the Extensible Authentication Protocol-response message includes the token, and the Extensible Authentication Protocol-identity message includes the token.

It should be noted that the token or the UDP port number is used to perform verification on or identify an authorized Wireless Local Area Network Control Protocol application.

An embodiment of the present invention provides a first device 111. As shown in FIG. 32, the first device is a trusted wireless local area network access gateway TWAG, or the first device includes a TWAG and a trusted wireless local area network authentication, authorization, and accounting service proxy TWAP, and the first device includes a receiver 1111, a transmitter 1112, and a processor 1113.

The receiver 1111 is configured to receive a first message sent by a second device, where the first message includes a second message and a UDP port number, and the second message includes the encrypted UDP port number; or the receiver 1111 is further configured to receive a first message sent by a second device, where the first message includes the second message, and the second message includes the encrypted UDP port number.

The transmitter 1112 is configured to send the second message to the terminal.

In this way, first, a first message sent by a second device is received, where the first message includes a second message and a UDP port number, and the second message includes the encrypted UDP port number; or a first message sent by a second device is received, where the first message includes the second message, and the second message includes the encrypted UDP port number; and then the second message is sent to the terminal. This effectively reduces a resource waste on a network side that is caused when WLCP is triggered by a malicious application on the terminal.

The receiver 1111 is further configured to:
receive a packet data network connection request message sent by the terminal, where the packet data network connection request message includes the UDP port number, and the packet data network connection request message is a packet data network connection establishment request message, a packet data network disconnection request message, or a packet data network connection release request message.

The processor 1113 is configured to verify whether the UDP port number that is in the packet data network connection request message and corresponding to an identifier of the terminal is the same as a locally stored UDP port number corresponding to the identifier of the terminal.

The transmitter 1112 is further configured to:
if the UDP port number that is in the packet data network connection request message and corresponding to the identifier of the terminal is the same as the locally stored UDP port number corresponding to the identifier of the terminal, send a packet data network connection response message to the terminal, where the packet data network connection response message is a packet data network connection establishment response message, a packet data network disconnection response message, or a packet data network connection release response message.

The processor 1113 is further configured to:
check whether the packet data network connection request message includes the UDP port number.

The processor 1113 is further configured to:
if the packet data network connection request message includes the UDP port number, verify whether the UDP port number that is in the packet data network connection request message and corresponding to an identifier of the terminal is the same as a locally stored UDP port number corresponding to the identifier of the terminal.

The transmitter 1112 is further configured to:
if the UDP port number that is in the packet data network connection request message and corresponding to the identifier of the terminal is the same as the locally stored UDP port number corresponding to the identifier of the terminal, send a packet data network connection response message to the terminal, where the packet data network connection response message is a packet data network connection establishment response message, a packet data network disconnection response message, or a packet data network connection release response message.

When the first message includes the second message and the authentication parameter, and the second message includes the encrypted authentication parameter,
the processor 1113 is further configured to read the UDP port number corresponding to the identifier of the terminal and the identifier of the terminal from the first message; and
the processor 1113 is further configured to store the UDP port number corresponding to the identifier of the terminal and the identifier of the terminal.

When the first message includes the second message, and the second message includes the encrypted authentication parameter,
the processor 1113 is further configured to generate the UDP port number corresponding to the identifier of the terminal;
the processor 1113 is further configured to store the UDP port number corresponding to the identifier of the terminal and the identifier of the terminal; and
the transmitter 1112 is further configured to send the UDP port number to the second device.

When the first message includes the second message and the authentication parameter,
the receiver 1111 is further configured to receive a third message sent by the terminal, where the third message includes the encrypted authentication parameter; and
the transmitter 1112 is further configured to send the first message to the second device, where the first message includes the third message.

Detailed execution content of the first device is described in the embodiments of the present invention. Details are not described herein. A difference lies in that a token described in the embodiments of the present invention may be changed into a UDP port number.

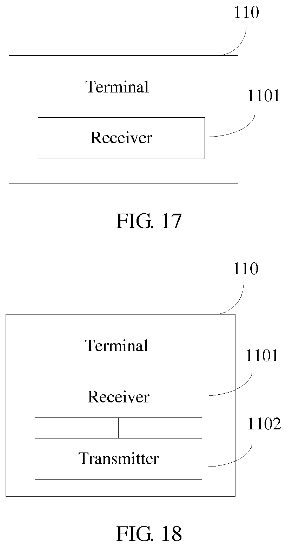

An embodiment of the present invention provides a terminal 110. As shown in FIG. 17, and the terminal includes:
a receiver 1101, configured to receive a second message sent by a first device, where the second message includes the encrypted token.

After receiving the second message sent by the first device, the terminal first parses the second message to obtain the encrypted token, where the second message includes the encrypted token; decrypts the token to obtain the token; and then transmits the token to a message queue of an application manager of the terminal, so that the Wireless Local Area Network Control Protocol application calls the token from the message queue by using an API (Application Programming Interface, application programming interface) between the Wireless Local Area Network Control Protocol application and an operating system of the terminal. In this way, a malicious application on the terminal cannot use the private API between the Wireless Local Area Network Control Protocol application on the terminal and the operating system; therefore, the malicious application cannot call the token, and when the malicious application calls a UDP port used by the WLCP APP, to send a packet data network connection release request message to the first device to trigger WLCP, the first device determines that the packet data network connection release request message does not include the token, and therefore, the first device considers that the packet data network connection release request message is an unauthorized packet data network connection release request message, and discards the packet data network connection release request message. Therefore, a resource waste on a network side that is caused when WLCP is triggered by a malicious application on the terminal is effectively reduced, and an intention of maliciously breaking a PDN connection by the malicious application is effectively reduced.

The second message includes the encrypted token. The second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ; or particularly, the second message may be another Extensible Authentication Protocol payload (EAP-payload) message.

In this way, a second message sent by a first device is received, and the second message includes the encrypted token. This effectively reduces a resource waste on a network side that is caused when WLCP is triggered by a malicious application on a terminal.

As shown in FIG. 18, the terminal 110 further includes:
a transmitter 1102, configured to send a packet data network connection request message to the first device, where the packet data network connection request message includes the token, and the packet data network connection request message is a packet data network connection establishment request message, a packet data network disconnection request message, or a packet data network connection release request message.

The receiver 1101 is further configured to:
receive a packet data network connection response message sent by the first device, where the packet data network connection response message is a packet data network connection establishment response message, a packet data network disconnection response message, or a packet data network connection release response message.

It should be noted that the token or the UDP port number is used to perform verification on or identify an authorized Wireless Local Area Network Control Protocol application.

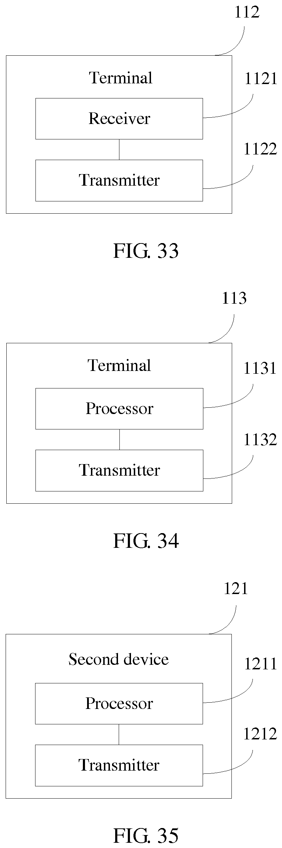

An embodiment of the present invention provides a terminal 112. As shown in FIG. 33, the terminal includes a receiver 1121 and a transmitter 1122.

The receiver 1121 is configured to receive a second message sent by a first device, where the second message includes the encrypted UDP port number.

In this way, a second message sent by a first device is received, and the second message includes the encrypted UDP port number. This effectively reduces a resource waste on a network side that is caused when WLCP is triggered by a malicious application on a terminal.

The transmitter 1122 is configured to send a packet data network connection request message to the first device, where the packet data network connection request message includes the UDP port number, and the packet data network connection request message is a packet data network connection establishment request message, a packet data network disconnection request message, or a packet data network connection release request message.

The receiver 1121 is further configured to:
receive a packet data network connection response message sent by the first device, where the packet data network connection response message is a packet data network connection establishment response message, a packet data network disconnection response message, or a packet data network connection release response message.

Detailed execution content of the terminal is described in the embodiments of the present invention. Details are not described herein. A difference lies in that a token described in the embodiments of the present invention may be changed into a UDP port number.

An embodiment of the present invention provides a terminal 113. As shown in FIG. 34, and the terminal includes:
a processor 1131, configured to generate an authentication parameter corresponding to an identifier of the terminal, where the authentication parameter is a token or a User Datagram Protocol UDP port number; where
the processor 1131 is further configured to encrypt the authentication parameter; and
a transmitter 1132, configured to send a third message to the first device, where the third message includes the encrypted authentication parameter.

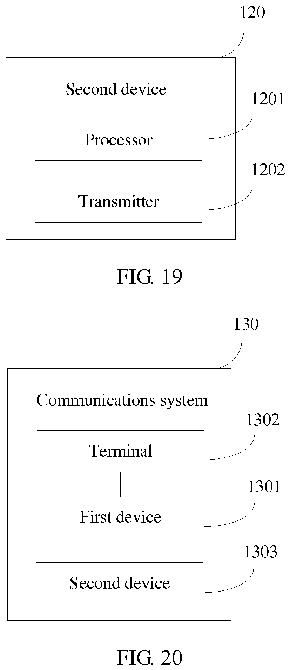

An embodiment of the present invention provides a second device 120. As shown in FIG. 19, the second device is an authentication, authorization, and accounting server AAA or a home subscriber server HSS, and the second device includes a processor 1201 and a transmitter 1202.

The processor 1201 is configured to obtain a token.

The processor 1201 is further configured to encrypt the token.

The second device may generate a key and encrypt the token to prevent another unauthorized user from intercepting and seeing the token, and the key may be a TEK (Transient EAP Keys, transient EAP key). It should be noted that the second device may encrypt the token in a CBC (Cipher Block Chaining, cipher block chaining) mode by using the AES (advanced Encryption standard, Advanced Encryption Standard) and a 128-bit key.

The processor 1201 is further configured to perform integrity protection on a first message, where the first message includes a second message and the token, and the second message includes the encrypted token; or the processor 1201 is further configured to perform integrity protection on a first message, where the first message includes the second message, and the second message includes the encrypted token.

After encrypting the token, the second device generates the second message, where the second message includes the encrypted token; encapsulates the second message to generate the first message; and performs integrity protection on the first message to prevent another unauthorized user from intercepting and modifying the first message, where the first message includes the second message.

It should be noted that the second device may generate message authentication code according to a MAC (message authentication code, message authentication code) algorithm HMAC-SHA1-128, an authentication key, and the first message. The second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ; or particularly, the second message may be another Extensible Authentication Protocol payload (EAP-payload) message.

The transmitter 1202 is configured to send the first message to a first device, so that the first device obtains the second message from the first message.

It should be noted that a message is exchanged between the second device and the first device by using the DIAMETER protocol, and the first message is a message borne in the DIAMETER protocol. The first message may be either of a DIAMETER-Extensible Authentication Protocol-answer-command message (DIAMETER-EAP-Answer-Command) and an authentication, authorization, and accounting message (AAA), the DIAMETER-Extensible Authentication Protocol-answer-command message bears an Extensible Authentication Protocol payload (EAP-payload), the Extensible Authentication Protocol payload (EAP-payload) may be any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ), and the authentication, authorization, and accounting message includes any one of an Extensible Authentication Protocol-Authentication and Key Agreement'-notification message (EAP-AKA'-Notification), an Extensible Authentication Protocol-Authentication and Key Agreement'-identity message (EAP-AKA'-Identity), or an Extensible Authentication Protocol-request message (EAP-REQ).

In this way, a token is first obtained; then the token is encrypted; integrity protection is performed on a first message, where the first message includes a second message and the token, and the second message includes the encrypted token; or integrity protection is performed on a first message, where the first message includes the second message, and the second message includes the encrypted token; and then the first message is sent to a first device, so that the first device obtains the second message from the first message. This effectively reduces a resource waste on a network side that is caused when WLCP is triggered by a malicious application on a terminal.

The processor 1201 is specifically configured to generate the token corresponding to an identifier of the terminal.

First, the terminal performs normal network attachment, and an EAP (Extensible Authentication Protocol, Extensible Authentication Protocol) message is exchanged between the terminal and the second device, so that the second device obtains the identifier of the terminal. Then the second device may generate the token (Token) corresponding to the identifier of the terminal, and the token is used to perform verification on or identify a Wireless Local Area Network Control Protocol application (WLCP APP) on the terminal.

Particularly, each time the terminal needs to access a communications network, the second device may obtain the identifier of the terminal, and may re-generate a token corresponding to the identifier of the terminal, to update the token of the terminal. A different token may be generated each time, and the communications network may be the 3^{rd} generation mobile communication cellular network or the 4^{th} generation mobile communication cellular network.

It should be noted that the identifier of the terminal may be an IMSI (International Mobile Subscriber Identification Number, international mobile subscriber identity), a MAC (Media Access Control, Media Access Control layer) address, or an IP (Internet Protocol, Internet Protocol) address. The token may be generated by means of definition by an operator, and uniqueness of the generated token needs to be ensured. A specific manner of generating a token belongs to the prior art, and details are not described herein in this embodiment of the present invention.

The processor 1201 is specifically configured to:
receive the token sent by the first device.

The token may be obtained from a received DIAMETER-Extensible Authentication Protocol-request-command message DIAMETER-EAP-REQ-Command or a received authentication, authorization, and accounting message AAA sent by the first device. The authentication, authorization, and accounting message includes an Extensible Authentication Protocol-response message EAP-RSP or an Extensible Authentication Protocol-identity message EAP-Identity, the DIAMETER-Extensible Authentication Protocol-request-command message includes the token, the Extensible Authentication Protocol-response message includes the token, and the Extensible Authentication Protocol-identity message includes the token.

It should be noted that the token is used to perform verification on or identify an authorized Wireless Local Area Network Control Protocol application.

An embodiment of the present invention provides a second device 121. As shown in FIG. 35, the second device is an authentication, authorization, and accounting server AAA or a home subscriber server HSS, and the second device includes:
a processor 1211, configured to obtain a UDP port number; where
the processor 1211 is further configured to encrypt the UDP port number; and
the processor 1211 is further configured to perform integrity protection on a first message, where the first message includes a second message and the UDP port number, and the second message includes the encrypted UDP port number; or the processor 1211 is further configured to perform integrity protection on a first message, where the first message includes the second message, and the second message includes the encrypted UDP port number; and
a transmitter 1212, configured to send the first message to a first device, so that the first device obtains the second message from the first message.

In this way, a UDP port number is first obtained; then the UDP port number is encrypted; integrity protection is performed on a first message, where the first message includes a second message and the UDP port number, and the second message includes the encrypted UDP port number; or integrity protection is performed on a first message, where the first message includes the second message, and the second message includes the encrypted UDP port number; and then the first message is sent to a first device, so that the first device obtains the second message from the first message. This effectively reduces a resource waste on a network side that is caused when WLCP is triggered by a malicious application on a terminal.

The processor 1211 is specifically configured to generate the UDP port number corresponding to an identifier of the terminal.

The processor 1211 is specifically configured to:
receive the UDP port number sent by the first device.

It should be noted that the UDP port number is used to perform verification on or identify an authorized Wireless Local Area Network Control Protocol application.

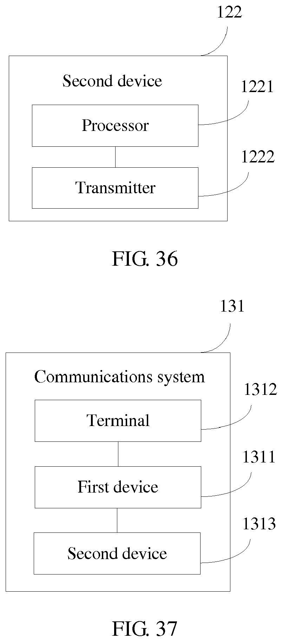

An embodiment of the present invention provides a second device 122. As shown in FIG. 36, the second device is an authentication, authorization, and accounting server AAA or a home subscriber server HSS, and the second device includes:
a processor 1221, configured to obtain an authentication parameter, where the authentication parameter is a token or a User Datagram Protocol UDP port number; where
the processor 1221 is further configured to encrypt the authentication parameter; and
the processor 1221 is further configured to: perform integrity protection on a second message, and generate a first message, where the first message includes the second message and the authentication parameter, and the second message includes the encrypted authentication parameter; or the processor 1221 is further configured to: perform integrity protection on a second message, and generate a first message, where the first message includes the second message, and the second message includes the encrypted authentication parameter; and
a transmitter 1222, configured to send the first message to a first device, so that the first device obtains the second message or the authentication parameter from the first message.

The processor 1221 is specifically configured to:
generate the authentication parameter corresponding to an identifier of the terminal; or receive the authentication parameter sent by the first device; or receive the first message sent by the first device, and perform a decryption operation on the encrypted authentication parameter, where the first message includes a third message, and the third message includes the encrypted authentication parameter.

Detailed execution content of the second device is described in the embodiments of the present invention. Details are not described herein. A difference lies in that a token described in the embodiments of the present invention may be changed into a UDP port number.

An embodiment of the present invention provides a communications system 130 As shown in FIG. 20, the communications system 130 includes:
a first device 1301, a terminal 1302, and a second device 1303.

The second device 1303 is configured to: obtain a token;
encrypt the token;
perform integrity protection on a first message, where the first message includes a second message and the token, and the second message includes the encrypted token; or perform integrity protection on a first message, where the first message includes the second message, and the second message includes the encrypted token; and
send the first message to the first device, so that the first device obtains the second message from the first message.

The first device 1301 is configured to: receive the first message sent by the second device, where the first message includes the second message and the token, and the second message includes the encrypted token; or receive the first message sent by the second device, where the first message includes the second message, and the second message includes the encrypted token; and
send the second message to the terminal.

The terminal 1302 is configured to receive the second message sent by the first device, where the second message includes the encrypted token.

All of the first device 1301, the terminal 1302, and the second device 1303 may further generate a User Datagram Protocol (UDP) port number and a token corresponding to an identifier of the terminal.

An embodiment of the present invention provides a communications system 131.

As shown in FIG. 37, the communications system 131 includes:
a first device 1311, a terminal 1312, and a second device 1313.

The second device 1313 is configured to: obtain an authentication parameter, where the authentication parameter is a token or a User Datagram Protocol UDP port number;
encrypt the authentication parameter;
perform integrity protection on a first message, where the first message includes a second message and the authentication parameter, and the second message includes the encrypted authentication parameter; or perform integrity protection on a first message, where the first message includes the second message, and the second message includes the encrypted authentication parameter; or perform integrity protection on a second message, and generate a first message, where the first message includes the second message and the authentication parameter, and the second message includes the encrypted authentication parameter; or perform integrity protection on a second message, and generate a first message, where the first message includes the second message, and the second message includes the encrypted authentication parameter; or perform integrity protection on a second message, and generate a first message, where the first message includes the second message and the authentication parameter; and
send the first message to the first device, so that the first device obtains the second message or the authentication parameter from the first message.

The first device 1311 is configured to: receive the first message sent by the second device, where the first message includes the second message and the authentication parameter, the authentication parameter is a token or a User Datagram Protocol UDP port number, and the second message includes the encrypted authentication parameter; or receive the first message sent by the second device, where the first message includes the second message, the second message includes the encrypted authentication parameter, and the authentication parameter is a token or a User Datagram Protocol UDP port number; or receive the first message sent by the second device, where the first message includes the second message and the authentication parameter; and send the second message to the terminal.

The terminal 1312 is configured to: receive the second message sent by the first device, where the second message includes the encrypted authentication parameter, and the authentication parameter is a token or a User Datagram Protocol UDP port number; or generate the authentication parameter corresponding to an identifier of the terminal.

It should be noted that a packet data network connection establishment request message described in the present invention may be represented by a WLCP PDN connection request or a PDN connectivity request, and a packet data network connection establishment response message described in the present invention may be represented by a WLCP PDN connection response or a PDN connectivity response.

A packet data network disconnection request message may be represented by a WLCP PDN disconnection request, and a packet data network disconnection response message may be represented by a WLCP PDN disconnection response.

A packet data network connection release request message may be represented by a WLCP PDN connection release request or a PDN connection release request, and a packet data network connection release response message may be represented by a WLCP PDN connection release response or a PDN connection release response.

Particularly, if a first device checks that a packet data network connection request message does not include the token, the first device considers that the packet data network connection request message is an unauthorized packet data network connection request message, and the first device discards or does not process the packet data network connection request message, or may send a packet data network connection establishment reject message, a packet data network disconnection reject message, or a packet data network connection release reject message to a terminal, where the packet data network connection establishment reject message may be represented by PDN CONNECTIVITY REJECT, and the packet data network disconnection reject message may be represented by PDN DISCONNECTIVITY REJECT.

It should be noted that a first device described in the present invention may include a TWAP (Trusted WLAN AAA Proxy, trusted WLAN authentication, authorization, and accounting server proxy) and a trusted WLAN access gateway TWAG.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

In the several embodiments provided in this application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for accessing a communications network by a terminal, wherein the method is applied to a first device, the first device is a trusted wireless local area network access gateway TWAG, or the first device comprises a TWAG and a trusted wireless local area network authentication, authorization, and accounting service proxy TWAP, and the method comprises:
receiving a first message sent by a second device, wherein the first message comprises a second message and an authentication parameter, the authentication parameter is a token or a User Datagram Protocol UDP port number, and the second message comprises an encrypted authentication parameter; or
receiving a first message sent by a second device, wherein the first message comprises the second message, the second message comprises the encrypted authentication parameter, and the authentication parameter is a token or a User Datagram Protocol UDP port number; or
receiving a first message sent by a second device, wherein the first message comprises a second message and an authentication parameter; and
sending the second message to the terminal.

2. The method for accessing a communications network by a terminal according to claim 1, wherein after the sending the second message to the terminal, the method further comprises:
receiving a packet data network connection request message sent by the terminal, wherein the packet data network connection request message comprises the authentication parameter, and the packet data network connection request message is a packet data network connection establishment request message, a packet data network disconnection request message, or a packet data network connection release request message.

3. The method for accessing a communications network by a terminal according to claim 2, wherein after the receiving a packet data network connection request message sent by the terminal, the method further comprises:
verifying whether the authentication parameter that is in the packet data network connection request message and corresponding to an identifier of the terminal is the same as a locally stored authentication parameter corresponding to the identifier of the terminal; and
if the authentication parameter that is in the packet data network connection request message and corresponding to the identifier of the terminal is the same as the locally stored authentication parameter corresponding to the identifier of the terminal, sending a packet data network connection response message to the terminal, wherein the packet data network connection response message is a packet data network connection establishment response message, a packet data network disconnection response message, or a packet data network connection release response message.

4. The method for accessing a communications network by a terminal according to claim 2, wherein after the receiving a packet data network connection request message sent by the terminal, the method further comprises:
checking whether the packet data network connection request message comprises the authentication parameter;
if the packet data network connection request message comprises the authentication parameter, verifying whether the authentication parameter that is in the packet data network connection request message and corresponding to an identifier of the terminal is the same as a locally stored authentication parameter corresponding to the identifier of the terminal; and
if the authentication parameter that is in the packet data network connection request message and corresponding to the identifier of the terminal is the same as the locally stored authentication parameter corresponding to the identifier of the terminal, sending a packet data network connection response message to the terminal, wherein the packet data network connection response message is a packet data network connection establishment response message, a packet data network disconnection response message, or a packet data network connection release response message.

5. The method for accessing a communications network by a terminal according to any one of claims 1 to 4, wherein when the first message comprises the second message and the authentication parameter, and the second message comprises the encrypted authentication parameter, after the receiving a first message sent by a second device, the method further comprises:
reading the authentication parameter corresponding to the identifier of the terminal and the identifier of the terminal from the first message; and
storing the authentication parameter corresponding to the identifier of the terminal and the identifier of the terminal.

6. The method for accessing a communications network by a terminal according to any one of claims 1 to 4, wherein when the first message comprises the second message, and the second message comprises the encrypted authentication parameter, before the receiving a first message sent by a second device, the method further comprises:
generating the authentication parameter corresponding to the identifier of the terminal;
storing the authentication parameter corresponding to the identifier of the terminal and the identifier of the terminal; and
sending the authentication parameter to the second device.

7. The method for accessing a communications network by a terminal according to any one of claims 1 to 4, wherein when the first message comprises the second message and the authentication parameter, before the receiving a first message sent by a second device, the method further comprises:
receiving a third message sent by the terminal, wherein the third message comprises the encrypted authentication parameter; and
sending the first message to the second device, wherein the first message comprises the third message.

8. The method for accessing a communications network by a terminal according to any one of claims 1 to 7, wherein the authentication parameter is used to perform verification on or identify an authorized Wireless Local Area Network Control Protocol application.

9. The method for accessing a communications network by a terminal according to any one of claims 1 to 8, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

10. The method for accessing a communications network by a terminal according to any one of claims 1 to 9, wherein the first message is a message borne in the DIAMETER protocol.

11. The method for accessing a communications network by a terminal according to any one of claims 1 to 10, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

12. A method for accessing a communications network by a terminal, wherein the method applied to a terminal, and the method comprises:
receiving a second message sent by a first device, wherein the second message comprises an encrypted authentication parameter, and the authentication parameter is a token or a User Datagram Protocol UDP port number; or generating an authentication parameter corresponding to an identifier of the terminal.

13. The method for accessing a communications network by a terminal according to claim 12, wherein after the generating an authentication parameter corresponding to an identifier of the terminal, the method further comprises:
encrypting the authentication parameter; and
sending a third message to the first device, wherein the third message comprises the encrypted authentication parameter.

14. The method for accessing a communications network by a terminal according to claim 13, wherein after the receiving a second message sent by a first device, the method further comprises:
sending a packet data network connection request message to the first device, wherein the packet data network connection request message comprises the authentication parameter, and the packet data network connection request message is a packet data network connection establishment request message, a packet data network disconnection request message, or a packet data network connection release request message.

15. The method for accessing a communications network by a terminal according to claim 14, wherein after the sending a packet data network connection request message to the first device, the method further comprises:
receiving a packet data network connection response message sent by the first device, wherein the packet data network connection response message is a packet data network connection establishment response message, a packet data network disconnection response message, or a packet data network connection release response message.

16. The method for accessing a communications network by a terminal according to any one of claims 12 to 15, wherein the authentication parameter is used to perform verification on or identify an authorized Wireless Local Area Network Control Protocol application.

17. The method for accessing a communications network by a terminal according to any one of claims 12 to 16, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

18. The method for accessing a communications network by a terminal according to any one of claims 12 to 17, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

19. The method for accessing a communications network by a terminal, wherein the method is applied to a second device, the second device is an authentication, authorization, and accounting server AAA or a home subscriber server HSS, and the method comprises:
obtaining an authentication parameter, wherein the authentication parameter is a token or a User Datagram Protocol UDP port number;
encrypting the authentication parameter;
performing integrity protection on a first message, wherein the first message comprises a second message and the authentication parameter, and the second message comprises the encrypted authentication parameter; or performing integrity protection on a first message, wherein the first message comprises the second message, and the second message comprises the encrypted authentication parameter; or performing integrity protection on a second message, and generating a first message, wherein the first message comprises the second message and the authentication parameter, and the second message comprises the encrypted authentication parameter; or performing integrity protection on a second message, and generating a first message, wherein the first message comprises the second message, and the second message comprises the encrypted authentication parameter; or performing integrity protection on a second message, and generating a first message, wherein the first message comprises the second message and the authentication parameter; and
sending the first message to a first device, so that the first device obtains the second message or the authentication parameter from the first message.

20. The method for accessing a communications network by a terminal according to claim 19, wherein the obtaining an authentication parameter comprises:
generating the authentication parameter corresponding to an identifier of the terminal.

21. The method for accessing a communications network by a terminal according to claim 19, wherein the obtaining an authentication parameter comprises:
receiving the authentication parameter sent by the first device; or receiving the first message sent by the first device, and performing a decryption operation on the encrypted authentication parameter wherein the first message comprises a third message, and the third message comprises the encrypted authentication parameter.

22. The method for accessing a communications network by a terminal according to any one of claims 19 to 21, wherein the authentication parameter is used to perform verification on or identify an authorized Wireless Local Area Network Control Protocol application.

23. The method for accessing a communications network by a terminal according to any one of claims 19 to 22, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

24. The method for accessing a communications network by a terminal according to any one of claims 19 to 23, wherein the first message is a message borne in the DIAMETER protocol.

25. The method for accessing a communications network by a terminal according to any one of claims 19 to 24, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

26. A first device, wherein the first device is a trusted wireless local area network access gateway TWAG, or the first device comprises a TWAG and a trusted wireless local area network authentication, authorization, and accounting service proxy TWAP, and the first device comprises:
a first receiving unit, configured to receive a first message sent by a second device, wherein the first message comprises a second message and an authentication parameter, the authentication parameter is a token or a User Datagram Protocol UDP port number, and the second message comprises the encrypted authentication parameter; or the first receiving unit, further configured to receive a first message sent by a second device, wherein the first message comprises the second message, the second message comprises the encrypted authentication parameter, and the authentication parameter is a token or a User Datagram Protocol UDP port number; or the first receiving unit, further configured to receive a first message sent by a second device, wherein the first message comprises a second message and an authentication parameter; and
a first sending unit, configured to send the second message to the terminal.

27. The first device according to claim 26, wherein the first device further comprises:
a second receiving unit, configured to receive a packet data network connection request message sent by the terminal, wherein the packet data network connection request message comprises the authentication parameter, and the packet data network connection request message is a packet data network connection establishment request message, a packet data network disconnection request message, or a packet data network connection release request message.

28. The first device according to claim 27, wherein the first device further comprises:
a first verification unit, configured to verify whether the authentication parameter that is in the packet data network connection request message and corresponding to an identifier of the terminal is the same as a locally stored authentication parameter corresponding to the identifier of the terminal; and
a second sending unit, configured to: if the authentication parameter that is in the packet data network connection request message and corresponding to the identifier of the terminal is the same as the locally stored authentication parameter corresponding to the identifier of the terminal, send a packet data network connection response message to the terminal, wherein the packet data network connection response message is a packet data network connection establishment response message, a packet data network disconnection response message, or a packet data network connection release response message.

29. The first device according to claim 27, wherein the first device further comprises:
a check unit, configured to check whether the packet data network connection request message comprises the authentication parameter;
a second verification unit, configured to: if the packet data network connection request message comprises the authentication parameter, verify whether the authentication parameter that is in the packet data network connection request message and corresponding to an identifier of the terminal is the same as a locally stored authentication parameter corresponding to the identifier of the terminal; and
a third sending unit, configured to: if the authentication parameter that is in the packet data network connection request message and corresponding to the identifier of the terminal is the same as the locally stored authentication parameter corresponding to the identifier of the terminal, send a packet data network connection response message to the terminal, wherein the packet data network connection response message is a packet data network connection establishment response message, a packet data network disconnection response message, or a packet data network connection release response message.

30. The first device according to any one of claims 26 to 29, wherein when the first message comprises the second message and the authentication parameter, and the second message comprises the encrypted authentication parameter, the first device further comprises:
a reading unit, configured to read the authentication parameter corresponding to the identifier of the terminal and the identifier of the terminal from the first message; and
a first storage unit, configured to store the authentication parameter corresponding to the identifier of the terminal and the identifier of the terminal.

31. The first device according to any one of claims 26 to 29, wherein when the first message comprises the second message, and the second message comprises the encrypted authentication parameter, the first device further comprises:
a generation unit, configured to generate the authentication parameter corresponding to the identifier of the terminal;
a second storage unit, configured to store the authentication parameter corresponding to the identifier of the terminal and the identifier of the terminal; and
a fourth sending unit, configured to send the authentication parameter to the second device.

32. The first device according to any one of claims 26 to 29, wherein when the first message comprises the second message and the authentication parameter, the first device further comprises:
a third receiving unit, configured to receive a third message sent by the terminal, wherein the third message comprises the encrypted authentication parameter; and
a fifth sending unit, configured to send the first message to the second device, wherein the first message comprises the third message.

33. The first device according to any one of claims 26 to 32, wherein the authentication parameter is used to perform verification on or identify an authorized Wireless Local Area Network Control Protocol application.

34. The first device according to any one of claims 26 to 33, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

35. The first device according to any one of claims 26 to 34, wherein the first message is a message borne in the DIAMETER protocol.

36. The first device according to any one of claims 26 to 35, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

37. A terminal, wherein the terminal comprises:
a first receiving unit, configured to receive a second message sent by a first device, wherein the second message comprises the encrypted authentication parameter, and the authentication parameter is a token or a User Datagram Protocol UDP port number; or a generation unit, configured to generate an authentication parameter corresponding to an identifier of the terminal.

38. The terminal according to claim 37, wherein the terminal further comprises:
an encryption unit, configured to encrypt the authentication parameter; and
a sending unit, configured to send a third message to the first device, wherein the third message comprises the encrypted authentication parameter.

39. The terminal according to claim 38, wherein the terminal further comprises:
the sending unit is further configured to send a packet data network connection request message to the first device, wherein the packet data network connection request message comprises the authentication parameter, and the packet data network connection request message is a packet data network connection establishment request message, a packet data network disconnection request message, or a packet data network connection release request message.

40. The terminal according to claim 39, wherein the terminal further comprises:
a second receiving unit, configured to receive a packet data network connection response message sent by the first device, wherein the packet data network connection response message is a packet data network connection establishment response message, a packet data network disconnection response message, or a packet data network connection release response message.

41. The terminal according to any one of claims 37 to 40, wherein the authentication parameter is used to perform verification on or identify an authorized Wireless Local Area Network Control Protocol application.

42. The terminal according to any one of claims 37 to 41, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

43. The terminal according to any one of claims 37 to 42, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

44. A second device, wherein the second device is an authentication, authorization, and accounting server AAA or a home subscriber server HSS, and the second device comprises:
an obtaining unit, configured to obtain an authentication parameter, wherein the authentication parameter is a token or a User Datagram Protocol UDP port number;
an encryption unit, configured to encrypt the authentication parameter;
an integrity protection unit, configured to perform integrity protection on a first message, wherein the first message comprises a second message and the authentication parameter, and the second message comprises the encrypted authentication parameter; or the integrity protection unit, further configured to perform integrity protection on a first message, wherein the first message comprises the second message, and the second message comprises the encrypted authentication parameter; or the integrity protection unit, further configured to: perform integrity protection on a second message, and generate a first message, wherein the first message comprises the second message and the authentication parameter, and the second message comprises the encrypted authentication parameter; or the integrity protection unit, further configured to: perform integrity protection on a second message, and generate a first message, wherein the first message comprises the second message, and the second message comprises the encrypted authentication parameter; or the integrity protection unit, further configured to: perform integrity protection on a second message, and generate a first message, wherein the first message comprises the second message and the authentication parameter; and
a sending unit, configured to send the first message to a first device, so that the first device obtains the second message or the authentication parameter from the first message.

45. The second device according to claim 44, wherein the obtaining unit is specifically configured to:
generate the authentication parameter corresponding to an identifier of the terminal.

46. The second device according to claim 44, wherein the obtaining unit is specifically configured to:
receive the authentication parameter sent by the first device; or receive the first message sent by the first device, and perform a decryption operation on the encrypted authentication parameter, wherein the first message comprises a third message, and the third message comprises the encrypted authentication parameter.

47. The second device according to any one of claims 44 to 46, wherein the authentication parameter is used to perform verification on or identify an authorized Wireless Local Area Network Control Protocol application.

48. The second device according to any one of claims 44 to 47, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

49. The second device according to any one of claims 44 to 48, wherein the first message is a message borne in the DIAMETER protocol.

50. The second device according to any one of claims 44 to 49, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

51. A first device, wherein the first device is a trusted wireless local area network access gateway TWAG, or the first device comprises a TWAG and a trusted wireless local area network authentication, authorization, and accounting service proxy TWAP, and the first device comprises:
a receiver, configured to receive a first message sent by a second device, wherein the first message comprises a second message and an authentication parameter, the authentication parameter is a token or a User Datagram Protocol UDP port number, and the second message comprises the encrypted authentication parameter; or the receiver, further configured to receive a first message sent by a second device, wherein the first message comprises the second message, the second message comprises the encrypted authentication parameter, and the authentication parameter is a token or a User Datagram Protocol UDP port number; or the receiver, further configured to receive a first message sent by a second device, wherein the first message comprises a second message and an authentication parameter; and
a transmitter, configured to send the second message to the terminal.

52. The first device according to claim 51, wherein:
the receiver is further configured to:
receive a packet data network connection request message sent by the terminal, wherein the packet data network connection request message comprises the authentication parameter, and the packet data network connection request message is a packet data network connection establishment request message, a packet data network disconnection request message, or a packet data network connection release request message.

53. The first device according to claim 52, wherein the first device further comprises:
a processor, configured to verify whether the authentication parameter that is in the packet data network connection request message and corresponding to an identifier of the terminal is the same as a locally stored authentication parameter corresponding to the identifier of the terminal; wherein
the transmitter is further configured to:
if the authentication parameter that is in the packet data network connection request message and corresponding to the identifier of the terminal is the same as the locally stored authentication parameter corresponding to the identifier of the terminal, send a packet data network connection response message to the terminal, wherein the packet data network connection response message is a packet data network connection establishment response message, a packet data network disconnection response message, or a packet data network connection release response message.

54. The first device according to claim 52, wherein:
the processor is further configured to:
check whether the packet data network connection request message comprises the authentication parameter;
the processor is further configured to:
if the packet data network connection request message comprises the authentication parameter, verify whether the authentication parameter that is in the packet data network connection request message and corresponding to an identifier of the terminal is the same as a locally stored authentication parameter corresponding to the identifier of the terminal; and
the transmitter is further configured to:
if the authentication parameter that is in the packet data network connection request message and corresponding to the identifier of the terminal is the same as the locally stored authentication parameter corresponding to the identifier of the terminal, send a packet data network connection response message to the terminal, wherein the packet data network connection response message is a packet data network connection establishment response message, a packet data network disconnection response message, or a packet data network connection release response message.

55. The first device according to any one of claims 51 to 54, wherein when the first message comprises the second message and the authentication parameter, and the second message comprises the encrypted authentication parameter,
the processor is further configured to read the authentication parameter corresponding to the identifier of the terminal and the identifier of the terminal from the first message; and
the processor is further configured to store the authentication parameter corresponding to the identifier of the terminal and the identifier of the terminal.

56. The first device according to any one of claims 51 to 54, wherein when the first message comprises the second message, and the second message comprises the encrypted authentication parameter,
the processor is further configured to generate the authentication parameter corresponding to the identifier of the terminal;
the processor is further configured to store the authentication parameter corresponding to the identifier of the terminal and the identifier of the terminal; and
the transmitter is further configured to send the authentication parameter to the second device.

57. The first device according to any one of claims 51 to 56, wherein when the first message comprises the second message and the authentication parameter,
the receiver is further configured to receive a third message sent by the terminal, wherein the third message comprises the encrypted authentication parameter; and
the transmitter is further configured to send the first message to the second device, wherein the first message comprises the third message.

58. The first device according to any one of claims 51 to 57, wherein the authentication parameter is used to perform verification on or identify an authorized Wireless Local Area Network Control Protocol application.

59. The first device according to any one of claims 51 to 58, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

60. The first device according to any one of claims 51 to 59, wherein the first message is a message borne in the DIAMETER protocol.

61. The first device according to any one of claims 51 to 60, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

62. A terminal, wherein the terminal comprises:
a receiver, configured to receive a second message sent by a first device, wherein the second message comprises an encrypted authentication parameter, and the authentication parameter is a token or a User Datagram Protocol UDP port number; or a processor, configured to generate an authentication parameter corresponding to an identifier of the terminal, wherein the authentication parameter is a token or a User Datagram Protocol UDP port number.

63. The terminal according to claim 62, wherein:
the processor is further configured to encrypt the authentication parameter; and
the terminal further comprises:
a transmitter, configured to send a third message to the first device, wherein the third message comprises the encrypted authentication parameter.

64. The terminal according to claim 63, wherein:
the transmitter is further configured to send a packet data network connection request message to the first device, wherein the packet data network connection request message comprises the authentication parameter, and the packet data network connection request message is a packet data network connection establishment request message, a packet data network disconnection request message, or a packet data network connection release request message.

65. The terminal according to claim 64, wherein:
the receiver is further configured to:
receive a packet data network connection response message sent by the first device, wherein the packet data network connection response message is a packet data network connection establishment response message, a packet data network disconnection response message, or a packet data network connection release response message.

66. The terminal according to any one of claims 62 to 65, wherein the authentication parameter is used to perform verification on or identify an authorized Wireless Local Area Network Control Protocol application.

67. The terminal according to any one of claims 62 to 66, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

68. The terminal according to any one of claims 62 to 67, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

69. A second device, wherein the second device is an authentication, authorization, and accounting server AAA or a home subscriber server HSS, and the second device comprises:
a processor, configured to obtain an authentication parameter, wherein the authentication parameter is a token or a User Datagram Protocol UDP port number; wherein
the processor is further configured to encrypt the authentication parameter; and
the processor is further configured to perform integrity protection on a first message, wherein the first message comprises a second message and the authentication parameter, and the second message comprises the encrypted authentication parameter; or the processor is further configured to perform integrity protection on a first message, wherein the first message comprises the second message, and the second message comprises the encrypted authentication parameter; or the processor is further configured to: perform integrity protection on a second message, and generate a first message, wherein the first message comprises the second message and the authentication parameter, and the second message comprises the encrypted authentication parameter; or the processor is further configured to: perform integrity protection on a second message, and generate a first message, wherein the first message comprises the second message, and the second message comprises the encrypted authentication parameter; or the processor is further configured to: perform integrity protection on a second message, and generate a first message, wherein the first message comprises the second message and the authentication parameter; and
a transmitter, configured to send the first message to a first device, so that the first device obtains the second message or the authentication parameter from the first message.

70. The second device according to claim 69, wherein:
the processor is specifically configured to generate the authentication parameter corresponding to an identifier of the terminal.

71. The second device according to claim 70, wherein the processor is specifically configured to:
receive the authentication parameter sent by the first device; or receive the first message sent by the first device, and perform a decryption operation on the encrypted authentication parameter, wherein the first message comprises a third message, and the third message comprises the encrypted authentication parameter.

72. The second device according to any one of claims 69 to 71, wherein the authentication parameter is used to perform verification on or identify an authorized Wireless Local Area Network Control Protocol application.

73. The second device according to any one of claims 69 to 72, wherein the second message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-request message EAP-REQ.

74. The second device according to any one of claims 69 to 73, wherein the first message is a message borne in the DIAMETER protocol.

75. The second device according to any one of claims 69 to 74, wherein the third message is any one of an Extensible Authentication Protocol-Authentication and Key Agreement'-notification message EAP-AKA'-Notification, an Extensible Authentication Protocol-Authentication and Key Agreement'-identity message EAP-AKA'-Identity, or an Extensible Authentication Protocol-response message EAP-RSP.

76. A communications system, comprising:
the first device according to any one of claims 26 to 36 or any one of claims 51 to 61, the terminal according to any one of claims 37 to 43 or any one of claims 62 to 68, and the second device according to any one of claims 44 to 50 or any one of claims 69 to 75; wherein
the second device is configured to: obtain an authentication parameter, wherein the authentication parameter is a token or a User Datagram Protocol UDP port number;
encrypt the authentication parameter;
perform integrity protection on a first message, wherein the first message comprises a second message and the authentication parameter, and the second message comprises the encrypted authentication parameter; or perform integrity protection on a first message, wherein the first message comprises the second message, and the second message comprises the encrypted authentication parameter; or perform integrity protection on a second message, and generate a first message, wherein the first message comprises the second message and the authentication parameter, and the second message comprises the encrypted authentication parameter; or perform integrity protection on a second message, and generate a first message, wherein the first message comprises the second message, and the second message comprises the encrypted authentication parameter; or perform integrity protection on a second message, and generate a first message, wherein the first message comprises the second message and the authentication parameter; and
send the first message to the first device, so that the first device obtains the second message or the authentication parameter from the first message;
the first device is configured to: receive the first message sent by the second device, wherein the first message comprises the second message and the authentication parameter, the authentication parameter is a token or a User Datagram Protocol UDP port number, and the second message comprises the encrypted authentication parameter; or receive the first message sent by the second device, wherein the first message comprises the second message, the second message comprises the encrypted authentication parameter, and the authentication parameter is a token or a User Datagram Protocol UDP port number; or receive the first message sent by the second device, wherein the first message comprises the second message and the authentication parameter; and
send the second message to the terminal; and
the terminal is configured to: receive the second message sent by the first device, wherein the second message comprises the encrypted authentication parameter, and the authentication parameter is a token or a User Datagram Protocol UDP port number; or generate the authentication parameter corresponding to an identifier of the terminal.
